# EUROPEAN PATENT APPLICATION

(11) **EP 4 148 612 A1**
(43) Date of publication of application: **15.03.2023**
(21) Application number: 22193965.5
(22) Date of filing: 05.09.2022
(51) Int. Cl.: G06F 30/20, H01H 71/00, H02B 1/18, H02J 13/00

(54) **DESIGN AND CONFIGURATION OF ELECTRICAL DISTRIBUTION APPARATUS INCLUDING GENERATION OF DIGITAL TWIN**

(30) Priority: 10.09.2021 GB 202112913
(71) Applicant: Eaton Intelligent Power Limited, D04 Y0C2 Dublin 4 (IE)
(72) Inventor: KOLM, Roman, 2433 Margarethen am Moos (AT)
(74) Representative: Eaton IP Group EMEA

(57) **Abstract**

According to an aspect of the disclosure there is provided a method of designing and configuring an electrical distribution apparatus (1) for installation in a facility, wherein a set of electrical devices (3) for inclusion in the electrical distribution apparatus (1) is determined. At least one of the electrical devices (2) is a power managing device (2a) for controlling a flow of electrical energy via the electrical distribution apparatus (1). Further on, a mounting arrangement for mounting the set of electrical devices (3) within the enclosure (5) is generated and a digital twin (2a') of the configuration of the electrical distribution apparatus (1) and/or the at least one power managing device (2a) is generated or caused to be generated in a power management platform (164). Moreover, a design and configuration system (100) and a power management platform (164) are disclosed to execute the proposed method and to run the digital twin (2a').

## Description

### TECHNICAL FIELD

The disclosure relates generally to a method for designing and configuring an electrical distribution apparatus. Aspects of the disclosure relate to a method, to a design and configuration system, to a power management platform and to an arrangement, comprising a data network with one or more computers and/or computer servers, which is/are designed to execute a design and configuration system and to run a power management platform.

### BACKGROUND

Buildings commonly include an electrical distribution apparatus, such as a distribution board or a metering board, for safely distributing a supply of electrical power to the various electrical appliances of the building.

For such purposes, an electrical distribution apparatus typically includes a plurality of circuit breakers that provide protection for downstream devices. The circuit breakers may be selectively operated to cut-off the supply of electrical power to one or more subsidiary circuits, known as branch circuits, that connect to one or more electrical appliances of the building.

In particular, an electrical distribution apparatus may also comprise power managing devices, which control a flow of electrical energy via the electrical distribution apparatus. For example, it may be defined from where power is drawn or where to power is fed, from which kind of power source power is drawn, at which price power is drawn or delivered, at which time power may be drawn or delivered and so on. Recent developments especially allow power trading between private parties. However, in turn things get complicated with regards managing the power managing devices because before they can start working, a number of settings has to be done. Particularly, private people, who are no experts in power trading, may be overburdened by the effort to get these things running, and there is the risk that a number of people are excluded from this modern power trading just because it is too complicated. Apart from this social negative component, it is a technical necessity that power is generated near to a consumer to avoid power transfer over long distances. So, power trading within microgrids is not just a social but also a technical requirement.

### SUMMARY OF THE DISCLOSURE

Accordingly, an object of the invention is the provision of an improved method for designing and configuring an electrical distribution apparatus, an improved design and configuration system, an improved power management platform and an improved arrangement, comprising a data network with one or more computers and/or computer servers, which is/are designed to execute a design and configuration system and to run a power management platform. In particular, a solution shall be proposed, which inter alia enables people, who are no experts, participating power trading without hurdles.

According to an aspect of the present disclosure, there is provided a method of designing and configuring an electrical distribution apparatus for installation in a facility. The method comprises the determination of a set of electrical devices for inclusion in the electrical distribution apparatus and an enclosure for mounting the set of electrical devices by a design and configuration system. At least one of the electrical devices is a power managing device, which has a power management function, according to which a flow of electrical energy via the electrical distribution apparatus is controlled, and which has a memory for storing control data for controlling the power management function. The method also comprises generating a mounting arrangement for mounting the set of electrical devices within the enclosure by the design and configuration system. Moreover, in the proposed method, a digital twin of the configuration of the electrical distribution apparatus and/or the at least one power managing device is generated or caused to be generated in a power management platform on a computer server in a data network by the design and configuration system. The digital twin includes a graphical representation of the electrical distribution apparatus and/or the at least one power managing device and data related to the power management function of the at least one power managing device including said control data for controlling the power management function. The digital twin allows managing the power management function including generation and/or altering said data related to the power management function and including synchronization of said control data between the memory of the (real) at least one power managing device and the digital twin by the power management platform.

According to another aspect of the present disclosure there is provided a design and configuration system for designing and configuring an electrical distribution apparatus for installation in a facility. The design and configuration system is embodied to determine a set of electrical devices for inclusion in the electrical distribution apparatus and an enclosure for mounting the set of electrical devices. At least one of the electrical devices is a power managing device, which has a power management function, according to which a flow of electrical energy via the electrical distribution apparatus is controlled, and which has a memory for storing control data for controlling the power management function. The design and configuration system further is embodied to generate a mounting arrangement for mounting the set of electrical devices within the enclosure and to generate or cause to be generated a digital twin of the configuration of the electrical distribution apparatus and/or the at least one power managing device in a power management platform on a computer server in a data network. The digital twin includes a graphical representation of the electrical distribution apparatus and/or the at least one power managing device and data related to the power management function of the at least one power managing device including said control data for controlling the power management function. The digital twin allows managing the power management function including generation and/or altering said data related to the power management function and including synchronization of said control data between the memory of the (real) at least one power managing device and the digital twin by the power management platform.

According to a further aspect of the present disclosure there is provided a power management platform on a computer server in a data network, which power management platform is designed to receive data related to a digital twin of a configuration of an electrical distribution apparatus and/or at least one power managing device and to store the digital twin in a memory of the computer server. The electrical distribution apparatus includes a set of electrical devices and an enclosure for mounting the set of electrical devices. At least one of the electrical devices is a power managing device, which has a power management function, according to which a flow of electrical energy via the electrical distribution apparatus is controlled, and which has a memory for storing control data for controlling the power management function. The digital twin includes a graphical representation of the electrical distribution apparatus and/or the at least one power managing device and data related to the power management function of the at least one power managing device including said control data for controlling the power management function. The digital twin allows managing the power management function including generation and/or altering said data related to the power management function and including synchronization of said control data between the memory of the (real) at least one power managing device and the digital twin by the power management platform.

According to a yet another aspect of the present disclosure there is provided an arrangement, comprising a data network with one or more computers and/or computer servers, which is/are designed to execute a design and configuration system of the aforementioned kind and to run a power management platform of the aforementioned kind. The electrical distribution apparatus is installed in a facility and comprises a set of electrical devices and an enclosure for mounting the set of electrical devices. At least one of the electrical devices is a power managing device, which has a power management function, according to which a flow of electrical energy via the electrical distribution apparatus is controlled, and which has a memory for storing control data for controlling the power management function. The arrangement moreover comprises a data link between the design and configuration system and the power management platform and between the power management platform and the power managing device in the electrical distribution apparatus.

According to a further aspect of the present disclosure there is provided a non-transitory, computer-readable storage medium having instructions stored thereon that, when executed by a computer and/or a computer server, cause the computer and/or computer server to carry out the method of the aforementioned kind.

According to yet another aspect of the disclosure, there is provided a computer-implemented system for configuring an electrical distribution apparatus for installation in a facility. The system comprises a memory and a processor suitably programmed to provide: a user interface for enabling a user to establish a set of electrical devices and/or an enclosure for the electrical distribution apparatus; a mounting arrangement generator for generating a mounting arrangement for mounting the set of electrical devices within the enclosure according to a set of mounting rules; a digital twin generation module for generating a digital twin or causing generation of digital twin; an optional circuit layout generator for generating a circuit layout for providing electrical connections to the set of electrical devices according to set of layout rules; and an optional validation module for validating the mounting arrangement and/or the circuit layout to establish that the configuration of the set of electrical devices when mounted in the enclosure meets predetermined requirements for the electrical distribution apparatus.

In this manner, the computer-implemented system may form an interactive system, such as a web-based configurator, whereby user inputs and system outputs may be provided client-side through an appropriate user interface, whilst design, calculation and configuration processes of the system may be carried out on a server-side. However, although the web-based configurator is an advantageous solution, the method can also be executed locally on the PC of a person, who designs and configures the electrical distribution apparatus.

In an example, the user interface is adapted to enable the user to modify a configuration of the electrical distribution apparatus provided by the system, wherein the optional validation module is further adapted for validating the modified configuration. Such adaptations provide for reconfigurability and re-validation of the electrical distribution apparatus, for example allowing a user to customise the electrical distribution apparatus by selecting one or more additional, and/or alternative, electrical devices to be included in the electrical distribution apparatus.

Optionally, the user interface is adapted to constrain user choices in accordance with selections already made in accordance with a set of selection rules. In this manner, the computer-implemented system may provide for an efficient selection process, whereby the extent of user inputs is minimised.

Generally, an electrical device in an electrical distribution apparatus can comprise a power management function forming a power managing device and allowing it to control from where power is drawn, from which kind of power source power is drawn, at which price power is drawn, at which time power may be drawn and so on. In this way, a user of the electrical distribution apparatus can define how devices downstream of the electrical distribution apparatus are operated. In the same way, the power managing device can also control under which conditions power generated upstream of the electrical distribution apparatus may fed power into the grid. For example, the power managing devices may control where to power is delivered, at which price power is delivered, at which time power may be delivered and so on.

In particular, power managing devices can act in a power trading network via the power management platform so as to request or offer power as defined by the user. More particularly, trading and contracting can be based on the blockchain technology and allow peer-to-peer contracts without the need of traditional power suppliers.

To make this work, a number of settings has to be done. For example, a power managing device can be registered on a power management platform so that trading and contracting can take place. For this reason, a power managing device should have information, which power management platform it belongs to. Further data may be a name of the user of the electrical distribution apparatus, a location where the electrical distribution apparatus is mounted, rules or control parameters how power management shall be done, a wallet address or generally data for invoicing, etc.

By the proposed measures, not only a mounting arrangement for mounting the set of electrical devices within the enclosure is generated during design and configuration of the electrical distribution apparatus, but also a digital twin of the configuration of the electrical distribution apparatus and/or the at least one power managing device is generated or caused to be generated in a power management platform.

In this way, a number of problems are addressed at the same time. First, the digital twin allows managing the power managing device including generation and/or altering data related to its power management function. This data is synchronized between the memory of the power managing device and its digital twin. Because the digital twin includes a graphical representation of the electrical distribution apparatus and/or the at least one power managing device, it is very usable also for non-experts. Second, because the digital twin is generated or caused to be generated during design and configuration of the electrical distribution apparatus, there is the possibility that the person, who designs and configures the electrical distribution apparatus, enters all necessary data for the digital twin so that the power managing device may start working basically at the time it is powered. The person, who designs and configures the electrical distribution apparatus, usually is an expert, for example an electrician. It is much easier to him to make the power managing device work than for ordinary people.

The proposed measures also streamline the process of planning, design set up and operation of an electrical distribution apparatus. The expert may plan the electrical distribution apparatus with the customer and discuss all necessary aspects with him in a first step. During this discussion, the expert can also discuss the power managing feature with the customer. In a next step, the expert designs and configures the electrical distribution apparatus as outlined above. During this step, he may also implement the wishes of the customer with regards power management. After design and configuration, the electrical distribution apparatus is installed on site. Finally, in a fourth step, the electrical distribution apparatus actually starts operation when power is turned on. Provided that the power managing function has properly prepared by the expert, the power managing device may immediately start working.

It is not very uncommon that there is a certain amount of time between the steps above. For example, it can take several weeks to several month from the end of one step to the beginning of the next step. Advantageously, preparation of the power managing feature is concentrated in the first two steps so that it can be done very efficiently. This is contrary to the usual approach where the customer is left alone with management of the power managing devices when the electrical distribution apparatus starts operation.

Concluding, private people, who are no experts in power trading, get not overburdened by the effort to get the power managing devices running, and they are not excluded from modern power trading just because its complexity. Apart from this positive social component, the proposed measures also ensure that power can be consumed near its generation so as to avoid power transfer over long distances.

It should be noted that a "design and configuration system" can also be seen as a tool and thus synonymously termed as "design and configuration tool" throughout this disclosure. Depending on whether design or configuration predominates, it may also be termed as "design system (tool)" or "configuration system (tool)". In some instances of this disclosure, the "design and configuration system" moreover is simply termed "system". Of course, the terminology can similarly be applied to the proposed method.

"Determination of a set of electrical devices for inclusion in the electrical distribution apparatus" may mean explicitly requesting respective input from a user of the design and configuration system as well as proposing electrical devices according to user input and/or stored rules and automatic determination based on stored rules.

Generally, it is possible that
a) the electrical distribution apparatus comprises a single power managing device, and a digital twin of the configuration of the electrical distribution apparatus including a graphical representation of the same and data related to the power management function of the at least one power managing device is generated in the power management platform, which digital twin of the configuration of the electrical distribution apparatus allows managing the power management function or
b) the electrical distribution apparatus comprises a single power managing device, and a digital twin of the configuration of the electrical distribution apparatus including a graphical representation of the same and a digital twin of the power managing device including a graphical representation of the same and data related to the power management function of the at least one power managing device is generated in the power management platform, which digital twin of the power managing device allows managing the power management function or
c) the electrical distribution apparatus comprises a plurality of power managing devices, and a digital twin of the configuration of the electrical distribution apparatus including a graphical representation of the same and digital twins of the power managing devices, each including a graphical representation of the same and data related to the power management function of the respective power managing device is generated in the power management platform, which digital twins of the power managing devices allow managing the power management function or
d) the electrical distribution apparatus comprises a plurality of power managing devices, and a digital twin of the configuration of the electrical distribution apparatus including a graphical representation of the same and data related to the power management functions of the plurality of power managing devices is generated in the power management platform, which digital twin of the electrical distribution apparatus allows managing the power management functions.
These are advantageous variants of the proposed general measures.

It is advantageous if
i) the at least one power managing device has stored an address of the power management platform, which it contacts when it is powered, whereupon linking the digital twin to the at least one power managing device is initiated (in the power management platform) or
ii) the at least one power managing device has stored an address of a setup server, which it contacts when it is powered, and the setup server has stored an address of the power management platform, which it contacts when it is contacted by the at least one power managing device, whereupon linking the digital twin to the at least one power managing device is initiated (in the power management platform).

In case i), the digital twin of the configuration of the electrical distribution apparatus and/or the at least one power managing device is generated directly in the power management platform without the need of a setup server. Once the power managing device is powered, the digital twin gets "alive". In detail the power managing device contacts the power management platform when it is powered, and then the digital twin generated on the power management platform is linked to electrical distribution apparatus and/or the power managing device. The digital twin thereby becomes a "linked digital twin". Said linking can be done by entering a predefined or arbitrary code on both the power managing device and on the power management platform. In other words, a code can be entered in both the at least one power managing device and the digital twin, whereupon said digital twin is linked to the at least one power managing device. In this case, memory space in the power managing device for an identification can be empty when the power managing device is delivered to the customer. In another example, the identification is already part of the digital twin when it is generated. Here, the at least one power managing device has stored an identification, which it submits when it is powered, and the digital twin is linked to the at least one power managing device based on said identification. So, no code is needed to be entered, because once the power managing device contacts the power management platform with its identification, the power management is immediately ready to operate. In this case, a unique identification is already stored in the power managing device when it is delivered to the customer.

If linking the digital twin is done by use of an identification, preferably an identification stored in the at least one power managing device, which is intended to be built into the electrical distribution apparatus, is acquired by the design and configuration system and also stored in the digital twin or also stored in data for generating the digital twin before the at least one power managing device is built into the electrical distribution apparatus (e.g. during configuration/design of the electrical distribution apparatus, before the power managing device is delivered, etc.). For example, this may mean that the identification of a power managing device on stock, which is intended to be built into the electrical distribution apparatus, is retrieved and stored in the digital twin or in the data for generating the digital twin.

Alternatively, an identification of the at least one power managing device is acquired from a user during configuration of the electrical distribution apparatus and stored in the at least one power managing device, which is intended to be built into the electrical distribution apparatus, and also stored in the digital twin or also stored in data for generating the digital twin before the at least one power managing device is built into the electrical distribution apparatus (e.g. during design and configuration of the electrical distribution apparatus, before the power managing device is delivered, etc.). For example, this may mean that the identification is stored in a power managing device on stock, which is intended to be built into the electrical distribution apparatus.

In both cases, linking the digital twin to the power managing device is prepared during the design and configuration process.

It is also possible that the digital twin is just caused to be generated in the power management platform. In this case, data, which is necessary to generate the digital twin in the power management platform is stored on the power management platform for later use. Once the power managing device is powered, the digital twin is generated on the power management platform and gets "alive", i.e. is then linked as outlined above.

In case ii), the digital twin of the configuration of the electrical distribution apparatus and/or the at least one power managing device is just caused to be generated in the power management platform by preparing its generation on the setup server. Data for generating the digital twin in particular can be stored on the setup server by the design and configuration system, and said data is sent to the power management platform when the setup server is contacted by the power managing device upon being powered, whereupon the digital twin is generated based on that data received by the power management platform. In detail, data, which is necessary to generate the digital twin in the power management platform, is stored during the design of the electrical distribution apparatus on the setup server for later use. This data for example can contain the name of the user of the electrical distribution apparatus, the location, where the electrical distribution apparatus is installed, control parameters for controlling the power management function and so on. Once the power managing device is powered, the digital twin is generated on the power management platform and gets "alive". In detail, once the power managing device is powered, it contacts the setup server. Subsequently, data, which is necessary to generate the digital twin in the power management platform and which has been stored on the setup server is retrieved. This data inter alia contains the address of the power management platform. In a further step, the power management platform is contacted by the setup server and said data for the digital twin is transferred to the power management platform and used there to generate and link the digital twin. Linking the digital twin can be done in a similar way as already disclosed for the embodiment i), e.g., by entering a predefined or arbitrary code on both the power managing device and on the setup server or by use of an identification stored both in the power managing device and in the data for generating the digital twin.

Mixed embodiments of variants i) and ii) are possible as well. Here some data of the digital twin is stored in the power management platform and some data of the digital twin is stored on the setup server. So, for example, on the setup server the address of the power management platform can be stored, and on the power management platform the name of the user of the electrical distribution apparatus and the location, where the electrical device is installed, can be stored. In this mixed embodiment, just the part stored on the setup server is transferred to the power management platform when the digital twin is to be generated.

Once the power managing device is powered and linked, it may operate as defined in the power management platform, in particular as defined in control data in the digital twin, which at least in parts is synchronized with the power managing device. An example for such control data can be a preferred power source or a price limit. A preferred power source can be a standard energy source, a renewable power source, a photovoltaic power source, a power source based on a fuel cell, etc. A price limit can be set as an amount of money related to an amount of energy (e.g., 5 ct/kWh) or an open limit. In particular, the power managing device can act in a power trading network via the power management platform so as to request or offer power as defined by the user. Of course, said control data may be entered during design of the electrical distribution apparatus. In this way, the control data may be entered by the expert designing the electrical distribution apparatus, and the power managing device can fulfil its power management function according to said control data once the digital twin is linked and control data is synchronized.

Generally, the setup server and/or the power management platform may provide the possibility to enter or alter data related to the generation of the digital twin including an identification of the power managing device so that the generation of the digital twin may be influenced. In addition, the power management platform may provide the possibility to enter or alter control data in the digital twin to influence the way of working of the power management function of the power managing device.

In one example, an identification entered in the digital twin is synchronized with the at least one power managing device and stored in a memory there. So, the identification of the least one power managing device may be generated or changed in the digital twin and then is also stored in the memory of the power managing device.

Generally, the (physical) power managing device can be linked to the digital twin of the electrical distribution apparatus or the digital twin of the power managing device if there is just a single power managing device within the electrical distribution apparatus, which manages the total flow of electrical energy via the electrical distribution apparatus. In this case, the digital twin of the electrical distribution apparatus or the digital twin of the power managing device may be used to manage the total flow of electrical energy via the electrical distribution apparatus. If the power managing device(s) control flow of electrical energy into or from distinct electric circuits downstream of the electrical distribution apparatus, a digital twin of the power managing device or separate digital twins of the power managing devices may advantageously be used. It should be noted in this context, that managing several electric circuits may also be done through a single power managing device, which controls a number of switching devices. In this case, there may be a single digital twin containing control data of these switching devices, or there may also be separate digital twins for each switching device. Anyway, the logical structure of the digital twin(s) shall be designed in a way that makes clear to a user of the electrical distribution apparatus which device he is actually accessing.

In one example, the power management function or feature is enabled in the digital twin by default. However, in another example, an information is acquired during configuration of the electrical distribution apparatus by the design and configuration system whether managing the power management function shall be enabled in the digital twin or not (e.g. by means of a check box). So, the designer of the electrical distribution apparatus has the possibility to suppress the power management function or feature by ticking an associated check box or not or by giving a respective answer to the design and configuration system. If he decides that the power management function or feature shall not be enabled, there are a number of possibilities how to achieve that. In this case, a digital twin can be generated and linked as disclosed hereinbefore without switching on the power managing function, or a digital twin is not generated or linked at all. In the first case, the power managing function can be switched on in the digital twin later on. In the second case, the digital twin has to be generated and/or linked before.

In an advantageous embodiment, the proposed method comprises
- generating the mounting arrangement by the design and configuration system including consideration of mounting rules, according to which a mounting arrangement for mounting the set of electrical devices within the enclosure is generated
   generating a circuit layout for providing electrical connections to the set of electrical devices according to a set of layout rules by the design and configuration system and
   validating the mounting arrangement and/or the circuit layout by the design and configuration system in view of whether the configuration of the set of electrical devices meets predetermined requirements for the electrical distribution apparatus when mounted in the enclosure.

The arrangement of an electrical distribution apparatus should be compliant with stringent guidelines and regulatory standards to ensure that sufficient electrical safety is provided for the relevant application. However, the guidelines, requirements and standards differ between applications and geographical regions, amongst other variables. Hence, the design of an electrical distribution apparatus for a given application has traditionally been a complex process that requires the expertise of skilled professionals in the relevant field. By the proposed measures, the method may be advantageously configured to generate standards compliant electrical distribution apparatuses for a range of facilities, i.e. building applications.

In an example, the method may further comprise receiving a set of user inputs for determining the set of electrical devices and/or the enclosure. The set of electrical devices may be determined by selection from a plurality of electrical devices, and/or the enclosure may be determined by selection from a plurality of enclosures, according to a set of selection rules relating the set of user inputs to the set of electrical devices and/or the enclosure.

Hence, the method may be arranged to receive the set of user inputs and to advantageously select a corresponding enclosure and set of electrical devices for forming a standards compliant electrical distribution apparatus for a respective facility.

For example, the user inputs may define an apparatus attribute (for one or more apparatus parameters) that is indicative of a desired feature of the electrical distribution apparatus and/or a facility attribute (for one or more facility parameters) that is indicative of the properties of the facility that the electrical distribution apparatus design is being generated for.

In an example, the set of mounting rules may relate each electrical device in the set of electrical devices to a respective position in the enclosure for mounting that electrical device based on one or more attributes of that electrical device. The one or more attributes of that electrical device may be based on technical data associated with each device, for example, which may comprise a device attribute for a respective set of device parameters indicative of the configuration, and/or properties, of that device. The mounting rules may be pre-programmed by the developer or manufacturer based, at least in part, on one or more relevant standards and/or regulations related to the safety requirements of electrical distribution apparatuses, for example.

The set of mounting rules may, for example, determine positions for mounting the electrical devices on a set of rails of the enclosure, the set of mounting rules identifying a sub-set of the electrical devices for each rail based on: one or more attributes of those electrical devices, including a device category of each electrical device and a size of each electrical device; and/or one or more attributes of the enclosure, including a size of each rail. In this manner, the mounting rules may relate the electrical devices to respective positions on rails of the enclosure based on the functional categorisation of those electrical devices. For example, the device categories may include a main switch, a surge protection device, a RCD, a meter panel, an arc fault detection device, a residual current breaker with overcurrent protection (RCBO), and/or overcurrent protection devices (OCPD)s, such as a fuse and/or a circuit breaker, including a MCB.

In an example, the set of layout rules may relate each electrical device in the set of electrical devices to a respective position in the circuit layout between an inlet terminal and a plurality of outlet terminals based on one or more attributes of that electrical device. The one or more attributes of that electrical device may be based on technical data associated with each device, for example, which may comprise a device attribute for a respective set of device parameters indicative of the configuration, and/or properties, of that electrical device.

It shall be appreciated that the layout rules may be pre-programmed by the developer or manufacturer based, at least in part, on one or more relevant standards and/or regulations related to the safety requirements of electrical distribution apparatuses, for example.

The set of layout rules may, for example, determine a relative upstream, downstream or adjacent position, between the inlet terminal and the plurality of outlet terminals, for each of the electrical devices in the set of electrical devices based, at least in part, on a device category of each electrical device.

By upstream, downstream or adjacent positions it is intended to mean the relative position in the path of the electrical current, as it flows from the inlet terminal to the outlet terminal(s) of the electrical distribution apparatus.

In this manner, electrical devices may be suitably positioned within the circuit layout based on the functional categorisations of those electrical devices. For example, the main switch device category would include electrical devices intended for connection to an upstream end of the circuit (in order to protect the downstream devices) and the set of layout rules may be suitably configured to position such an electrical device in an upstream position in the circuit layout.

In an example, the set of layout rules may determine the respective position of each electrical device in the circuit layout based, at least in part, on the generated mounting arrangement. Advantageously, the set of layout rules may be based, at least in part, on the generated mounting arrangement so that the electrical devices are connected together within the enclosure in an efficient manner.

Validating the mounting arrangement and/or the circuit layout may, for example, comprise: estimating a heat dissipation capacity of the enclosure; estimating a power loss of the set of electrical devices, in use; and comparing the estimate of the heat dissipation capacity of the enclosure to the estimate of the power loss of the set of electrical devices, in use.

Consequently, the method may be configured to validate the safety of operating the electrical distribution apparatus in the facility.

Optionally, the estimate of the power loss of the set of electrical devices, in use, may be based, at least in part, on the electrical connections provided for the set of electrical devices in the generated circuit layout. In this manner, the estimate may take into account the likely distribution of current between the electrical devices and hence provide a more accurate estimate of the operating temperatures of the electrical devices.

In an example, the estimate of the power loss of the set of electrical devices, in use, may be determined based on a set of validation rules that: identify one or more sub-circuits based on the electrical connections provided for the set of electrical devices in the generated circuit layout, each sub-circuit comprising an upstream electrical device connected to one or more downstream electrical devices; determine a group rated current of each device based, at least in part, on the position of that device in the respective sub-circuit; and determine the estimate of the power loss of the set of electrical devices, in use, based, at least in part, on the group rated current for each electrical device.

It will be appreciated that preferred and/or optional features of each aspect of the disclosure may be incorporated alone or in appropriate combination in the other aspects of the disclosure also.

### BRIEF DESCRIPTION OF THE DRAWINGS

Examples of the disclosure will now be described with reference to the accompanying drawings, in which:
Figure 1 shows a view of an exemplary electrical distribution apparatus for a building;
Figure 2 shows a view of an interior of an enclosure of the exemplary electrical distribution apparatus shown in Figure 1;
Figure 3 shows an exemplary circuit layout for connecting a set of electrical devices of the electrical distribution apparatus, shown in Figure 1, into an electrical circuit;
Figure 4 shows an exemplary mounting arrangement, in which the set of electrical devices, shown in Figure 3, are mounted in the interior of the enclosure shown in Figure 2;
Figure 5 shows a schematic view of an exemplary system for designing and configuring an electrical distribution apparatus;
Figures 6 and 7 show a method of operating the system, shown in Figure 5, to generate a design of an electrical distribution apparatus, such as the electrical distribution apparatus shown in Figure 1;
Figure 8 shows example sub-steps of the method, shown in Figures 6 and 7, for determining a mounting arrangement for mounting a set of electrical devices within an enclosure of the electrical distribution apparatus;
Figure 9 shows example sub-steps of the method, shown in Figures 6 and 7, for determining a circuit layout for connecting a set of electrical devices of the electrical distribution apparatus into an electrical circuit;
Figure 10 shows example sub-steps of the method, shown in Figures 6 and 7, for estimating a total power loss of a set of electrical devices and a heat dissipation capacity of an enclosure
Figure 11 shows interaction between a power managing device, a power management platform and an optional setup server;
Figure 12 shows which steps are executed when the power managing device gets powered according to a first embodiment and
Figure 13 shows which steps are executed when the power managing device gets powered according to a second embodiment.

### DETAILED DESCRIPTION

Embodiments of the disclosure relate to providing a suitably designed and configured electrical distribution apparatus for a building including the generation of a digital or virtual twin of the electrical distribution apparatus, and in particular a design and configuration method and a design and configuration system for achieving this result. The "design and configuration system" may be termed "system" for short as the case may be.

The system is configured to receive a set of user inputs and to determine a corresponding set of electrical devices for inclusion in the electrical distribution apparatus and an enclosure for mounting the set of electrical devices within a common housing. For this purpose, the system may advantageously use a device selection algorithm that includes a set of selection rules relating the user inputs to a selection of devices from a database, or catalogue, of devices that are suitable for use in the electrical distribution apparatus.

The selection rules may be advantageously based, at least in part, on relevant standards and/or regulations so that the device selection algorithm may select an optimised set of devices for use in the electrical distribution apparatus.

The system is configured to further design and configure the electrical distribution apparatus by generating a mounting arrangement for mounting the set of electrical devices within the enclosure and optionally generating a circuit layout for providing electrical connections to the set of electrical devices.

As shall become clear, the system may use a mounting algorithm that includes a set of mounting rules relating each electrical device to a respective position in the enclosure. The system may alternatively, or additionally, use a layout algorithm that includes a set of layout rules relating each electrical device to a respective (upstream or downstream) position in the circuit layout such that suitable electrical connections may be determined.

In this manner the system may provide a suitably designed and configured electrical distribution apparatus for a building.

In an example, the system may be further configured to validate the mounting arrangement and/or the circuit layout to establish that the configuration of the set of electrical devices when mounted in the enclosure meets predetermined requirements for electrical configuration apparatus. For this purpose, the system may estimate whether the heat generated by operating the set of electrical devices, connected together in the manner described by the mounting arrangement and/or the circuit layout, is less than the heat dissipation capacity of the selected enclosure, as shall become clear. In this manner, the system may ensure that the design and configuration of the electrical distribution apparatus is compliant with one or more safety requirements.

Once validated, the system may output the mounting arrangement and/or the circuit layout for several advantageous uses, including the manufacturing and configuring of the electrical distribution apparatus, for example.

This system may advantageously be provided as a web-based configurator for generating standards compliant electrical distribution apparatuses for a range of buildings and applications.

At least one of the electrical devices is a power managing device, which has a power management function, according to which a flow of electrical energy via the electrical distribution apparatus is controlled, and which has a memory for storing control data for controlling the power management function. This power management function allows the power managing device to control from where power is drawn, from which kind of power source power is drawn, at which price power is drawn, at which time power may be drawn and so on. In this way, a user of the electrical distribution apparatus can define how devices downstream of the electrical distribution apparatus are operated. In the same way, a power managing device can also control under which conditions power generated upstream of the electrical distribution apparatus may fed power into the grid. For example, the power managing device may control where to power is delivered, at which price power is delivered, at which time power may be delivered and so on. In particular, a power managing device can act in a power trading network via a power management platform so as to request or offer power as defined by the user. More particularly, trading and contracting can be based on the blockchain technology and allow peer-to-peer contracts without the need of traditional power suppliers.

To allow managing the power management function, a digital twin of the configuration of the electrical distribution apparatus and/or the at least one power managing device is generated or caused to be generated in a power management platform on a computer server in a data network by the design tool. The digital twin includes a graphical representation of the electrical distribution apparatus and/or the power managing device and data related to the power management function of the power managing device including said control data for controlling the power management function. Managing the power management function includes generation and/or altering said data related to the power management function and includes synchronization of said control data between the memory of the (real) power managing device and the digital twin by the power management platform.

A power managing device can be an loT-gateway ("internet of things") controlling the behaviour of the electrical distribution apparatus with regards power management. It may also control the behaviour of single electric circuits if it can communicate with switching devices in the electrical distribution apparatus. Alternatively or in addition, single switching devices may have such a power management function, too. In such a case, a separate central power managing device may be omitted.

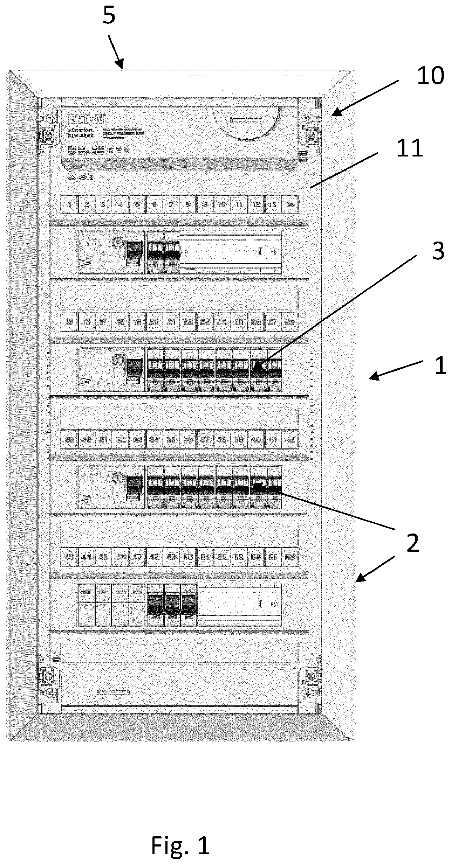

To give a better appreciation of the subject matter, Figures 1 to 3 show an example electrical distribution apparatus 1 that may be designed and configured by the system for a respective building (not shown) or facility.

In this example, the building takes the form of an apartment and the electrical distribution apparatus 1 is configured to distribute a supply of electrical power to the electrical appliances of the apartment. Accordingly, in this example, the electrical distribution apparatus 1 may take the form of a distribution board, commonly known as a consumer unit.

It shall be appreciated that this example is not intended to limit the scope of the disclosure, and in other examples, the electrical distribution apparatus 1 may take other forms, such as an energy metering board or another type of distribution board (e.g. an industrial consumer unit). The form of the electrical distribution apparatus 1 may depend on the intended use of the electrical distribution apparatus 1 and, in particular, the electrical requirements of the respective building or application.

As shown in Figure 1, the electrical distribution apparatus 1 comprises a set of devices 2 that include a set, or sub-set, of electrical devices 3, forming an electrical circuit, and an enclosure 5 that provides a common housing and support structure for the set of electrical devices 3.

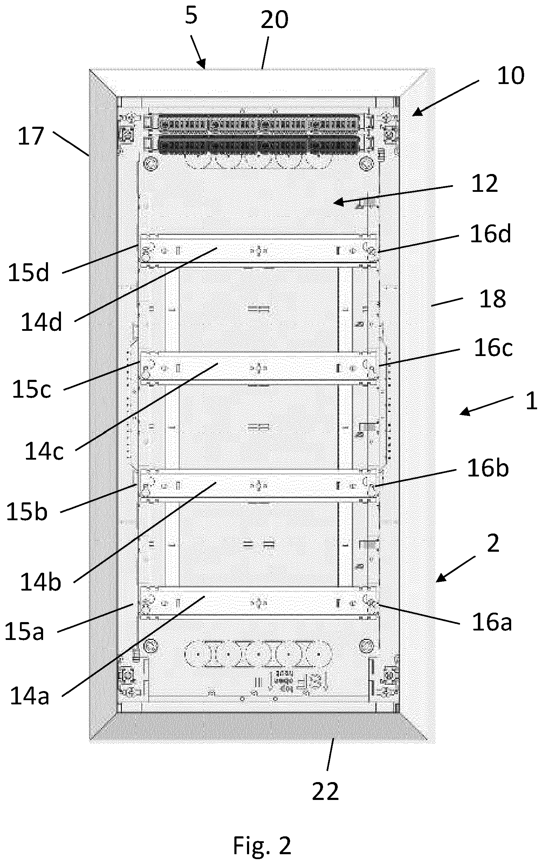

As shown with additional reference to Figure 2, the enclosure 5 is substantially box-shaped in this example and includes a front wall 10 defined, in part, by a cover panel 11 and a rear wall 12 opposite the front wall 10.

On the rear wall 12, the enclosure 5 includes a plurality of support structures for mounting the set of electrical devices 3. In particular, the enclosure 5 includes a set of rails 14a-d, such as DIN rails, that are standardised for supporting the electrical devices used in an electrical distribution apparatus.

In this example, the set of rails 14a-d includes a first rail 14a, a second rail 14b, a third rail 14c and a fourth rail 14d. Each of the first, second, third and fourth rails 14a-d extends laterally across the width of the rear wall 12 from a respective first end 15a-d, proximal to a first side 17 of the rear wall 12, to a respective second end 16a-d, proximal to a second side 18 of the rear wall 12. In this manner, the first, second, third and fourth rails 14a-d are arranged in parallel layers, with the first rail 14a forming a lowermost rail, proximal to a lower side 22 of the rear wall 12, the fourth rail 14d, forming an uppermost rail, proximal to an upper side 20 of the rear wall 12, and the second and third rails 14b-c forming intermediate layers between the first and fourth rails 14a-d.

In other examples, the enclosure may take other shapes, sizes and forms and include any number of rails or other support structures.

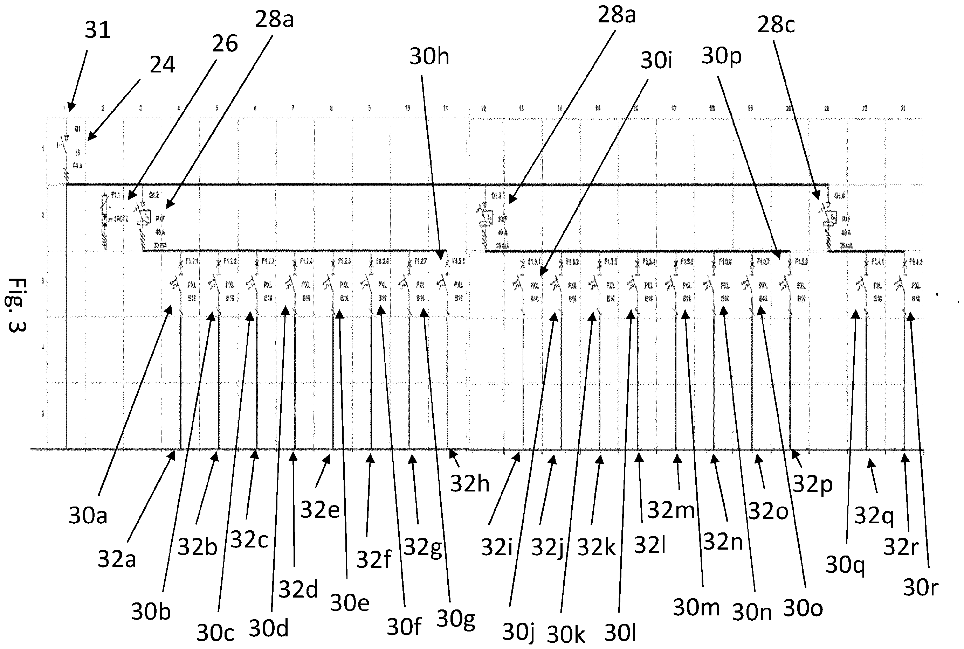

Figure 3 shows the set of electrical devices 3 connected together according to a circuit layout that forms the electrical circuit.

The electrical circuit is configured to distribute electrical power to a plurality of subsidiary circuits, known as branch circuits, that supply electrical power to one or more electrical appliances of the building. Such electrical appliances may include lighting devices, devices connected to electrical sockets and/or special loads, such as dishwashers that may have specific electrical connection requirements.

In this arrangement, the set of electrical devices 3 provide protective fuses, or circuit breakers, for each branch circuit, allowing selective control over the supply of electrical power to the various electrical appliances of the building.

Accordingly, in this example, the set of electrical devices 3 includes a main switch 24, in the form of a fuse switch-disconnector; a surge protection device 26, a group of residual current devices (RCD)s 28a-c and a group of miniature circuit breakers (MCB)s 30a-r.

The main switch 24 is connected to an inlet terminal 31 of the electrical circuit for controlling the downstream transfer of electrical power through the electrical distribution apparatus 1 and may be selectively operated to cut the supply of electrical power to all of the electrical appliances connected to the electrical distribution apparatus 1. The surge protection device 26 is connected between the main switch 24 and the first, second and third RCDs 28a-c, providing protection from voltage spikes at the inlet end of the circuit 3.

The first, second and third RCDs 28a-c are connected in parallel to one another and provided in the form of residual current circuit breakers (RCCB)s. Each of the first, second and third RCDs 28a-c connects to a respective downstream group of MCBs and may be selectively operated to cut the supply of electrical power to those MCBs. In particular, the first RCD 28a connects to eight downstream MCBs that are connected together in parallel and include a first to an eighth MCB 30a-h. The second RCD 28b connects to another eight downstream MCBs, connected in parallel to one another, including a ninth to a sixteenth MCB 30i-p, and the third RCD 28c connects to a further two downstream MCBs, connected in parallel to one another, including a seventeenth and an eighteenth MCB 30q-r.

Each MCB 30a-r is connected, in use, to a respective outlet terminal 32a-r of the electrical circuit and each outlet terminal 32a-r connects to a respective downstream branch circuit (not shown). In this manner, each MCB 30a-r may be selectively operated to cut the supply of electrical power to a respective branch circuit, thereby cutting-off the supply of electrical power to one or more electrical appliances of the building.

It shall be appreciated that the collective set of devices 2 are selected by the system on the basis of the user inputs, as mentioned previously.

In other examples, the set of electrical devices 3 may include any electrical devices that are known for use in an electrical distribution apparatus 1, including, amongst other devices, one or more devices selected from the following device categories: a main switch, a surge protection device, a RCD, a meter panel, an arc fault detection device, a residual current breaker with overcurrent protection (RCBO), and/or overcurrent protection devices (OCPD)s, such as a fuse and/or a circuit breaker, including a MCB.

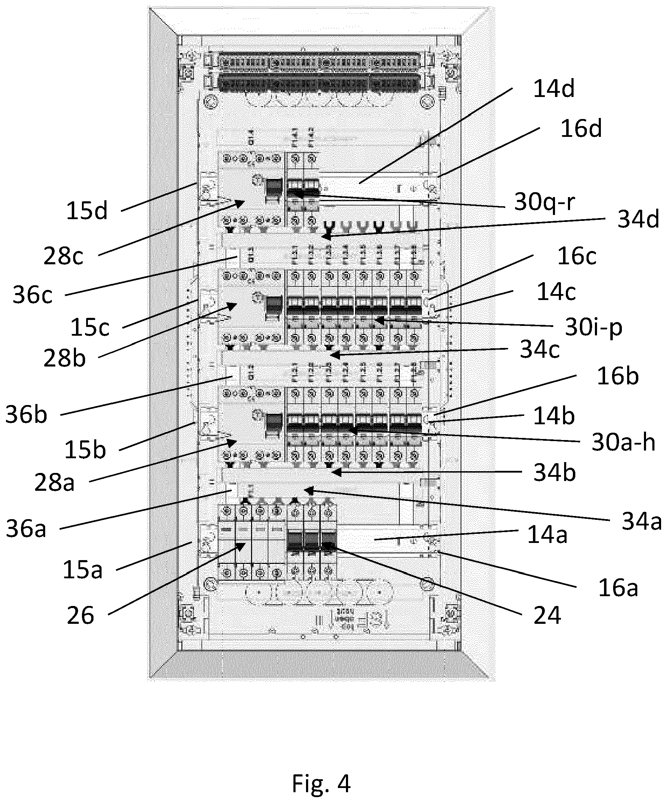

Figure 4 shows the electrical distribution apparatus 1 with the set of electrical devices 3 mounted inside the enclosure 5 and connected together by a set of busbar systems and interconnecting conductors to form the electrical circuit.

As shown in Figure 4, a first group of electrical devices comprising the main switch 24 and the surge protection device 26 are mounted on the first rail 14a and connected together by a first busbar system 34a. A second group of electrical devices, comprising the first RCD 28a and the first to eighth MCBs 30a-h, are mounted on the second rail 14b and connected together by a second busbar system 34b. A third group of electrical devices, comprising the second RCD 28b and the ninth to sixteenth MCBs 30i-p, are mounted on the third rail 14c and connected together by a third busbar system 34c. Lastly, a fourth group of the electrical devices, comprising the third RCD 28c and the seventeenth and eighteenth MCBs 30q-r, are mounted on the fourth rail 14d and connected together by a fourth busbar system 34d

In this manner, the MCBs 30a-r of each group are connected together in parallel to one another, downstream of the respective RCD 28a-c and the surge protection device 26 is connected to the first, second and third RCDs 28a-c by a set of interconnecting conductors 36a-c that includes a first interconnecting conductor 36a, a second interconnecting conductor 36b, and a third interconnecting conductor 36c.

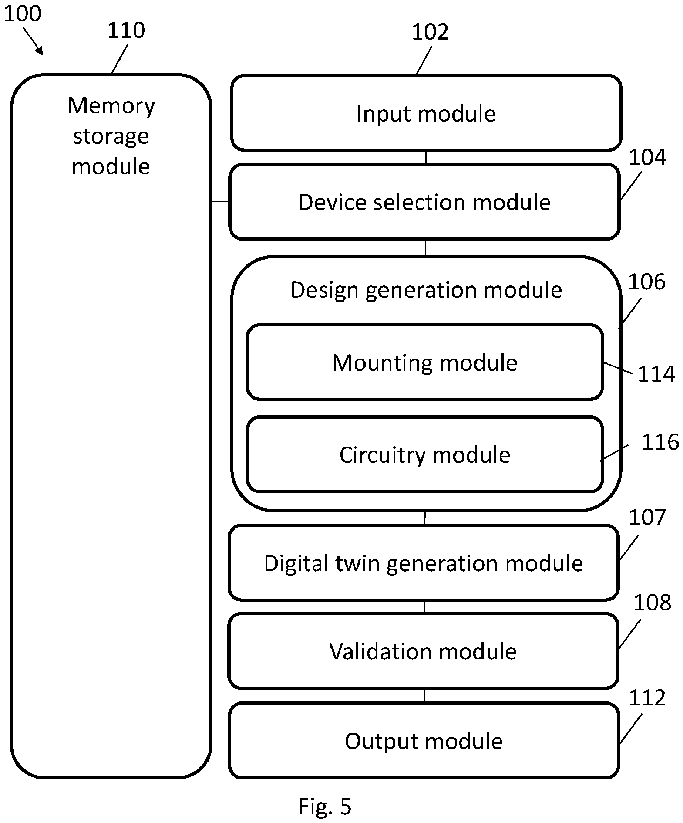

A system 100 for designing and configuring an electrical distribution apparatus, such as the electrical distribution apparatus 1 described above, shall now be described with reference to Figure 5.

The system 100 includes an input module 102, a device selection module 104, a design generation module 106, a digital twin generation module 107, an optional validation module 108, a memory storage module 110 and an output module 112. That is, in the described example seven major functional elements, units or modules are shown. Each of these units or modules may be provided by suitable software running on any suitable computing substrate using conventional or custom processors and memory. Some or all of the units or modules may use a common computing substrate (for example, they may run on the same server, and may be provided by a single application) or separate substrates, or different combinations of the modules may be distributed between multiple computing devices.

In an example, the input and output modules 102, 112 of the system 100 may further connect to a human machine interface system (not shown), such as a computing device, to form an interactive system, such as a web-based configurator. In this manner, user inputs and system outputs may be provided client-side through an appropriate user interface, whilst design, calculation and configuration processes of the system may be carried out on a server-side.

The input module 102 is configured to receive one or more user inputs that may define an apparatus attribute, for one or more apparatus parameters, and/or a facility attribute, for one or more facility parameters.

Each apparatus attribute may be indicative of desired features of the electrical distribution apparatus. For example, the one or more apparatus parameters may include at least one of the following: an electrical distribution apparatus category, for example with apparatus attributes that include a selection from: a consumer unit, an industrial consumer unit, and an energy metering board; a mounting style, such as flush mounting, for mounting the electrical distribution apparatus to the building; a material of the enclosure; inclusion of overvoltage protection; a choice of incoming connection, for example, with apparatus attributes selected from a main switch, with terminals, or without terminals; a product class, for example with apparatus attributes selected from a first product class with standard MCBs, a second product class with RCBOs and MCBs with Plug-in terminals, or a third product class with arc fault detection devices, and MCBs with Plug-in terminals; and/or accessory devices.

Each facility attribute may be indicative of the properties of the facility that the electrical distribution apparatus design is being generated for. For example, the one or more facility parameters may include at least one of the following: a building type, with facility attributes selected from an apartment, an apartment building, a residential building or a commercial building; a size or area of the building; a geographical region or country of the building; an ambient temperature of the building; an indoor, outdoor or in and outdoor application; an earthing, or grounding, system network of the building; a number of outgoing circuits; a number of circuits for lighting; a number of electrical sockets in the building, including for example, a number of special load sockets. In this manner, the facility attributes may be indicative of the electrical requirements of the facility.

In addition, the one or more facility parameters may include: a location and in particular an address of the facility, a name of the proprietor or user of the facility and the electrical distribution apparatus 1, devices consuming or generating electric power located downstream of the electrical distribution apparatus 1 (e.g. lighting, a washing machine, a loading station for an electric vehicle, a photovoltaic module, a battery for storing electric energy, an electrolyser for converting electric energy into hydrogen and/or a fuel cell for converting hydrogen into electric energy, etc.)

Generally, data related to the power management function may be an apparatus attribute or a facility parameter. If for example the power management function manages the way how a washing machine, which is downstream of a MCB, then the power management function can be seen as related both to the washing machine and/or the MCB. So, if the power management function defines a special rate for power drawn from the grid, the rate may be linked both to the washing machine and/or the MCB.

Generally, data related to the power management function may be control data for controlling the power management function, an address of the power management platform, an address of a setup server, an identification of the power managing device, a name of an energy provider or energy consumer, a price limit or price range, a kind of a power source, invoicing data, a wallet address, etc. For example, a power source can be a standard energy source, a renewable power source, a photovoltaic power source, a power source based on a fuel cell, etc. A price limit can be set as an amount of money related to an amount of energy (e.g., 5 ct/kWh) or an open limit.

Data related to the power management function can be entered during design or configuration of the electrical distribution apparatus 1 by the person, who does the design or configuration. Said data may also retrieved in parts or as a whole from the memory storage module 110.

Accordingly, the user inputs may define the type, intended use and electrical requirements of the building and/or the electrical distribution apparatus as well as data related to the power management function.

The input module may receive the one or more user inputs from the human machine interface system, for example.

The memory storage module 110 is configured to store a database of devices, including a plurality of electrical devices and a plurality of enclosures for mounting such devices, that are suitable for use in an electrical distribution apparatus. Accordingly, the database of devices may include a plurality of devices for each of the device categories typically used in an electrical distribution apparatus, which are mentioned above.

The memory storage module 110 may be configured to store a graphical representation of the electrical distribution apparatus 1 and a graphical representation of the power managing device. The memory storage module 110 may also be configured to store data related to the power management function as outlined before.

The memory storage module 110 may also be configured to store technical data associated with each device, for example comprising a device attribute for a respective set of device parameters indicative of the configuration, and/or properties, of that device.

For example, in relation to the enclosures, the technical data may include one or more devices attributes that describe the physical configuration of the enclosure, including amongst other device attributes: the size of the enclosure; an operating temperature of the enclosure; the number of DIN rails in the enclosure; and the length of each DIN rail. In relation to the electrical devices, the technical data may include one or more device attributes that describe the physical configuration of the electrical device, such as dimensions or mounting features of said device, and/or the electrical configuration of the electrical device, such as a rated current, and/or a number of poles of the device.

For this purpose, the memory storage module 110 may take the form of a cloud storage system or a computer-readable storage medium (e.g., a non-transitory computer-readable storage medium). The computer-readable storage medium may comprise any mechanism for storing information in a form readable by a machine or electrical processors/computational devices, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

The device selection module 104 is configured to access the memory storage module 110 and to select a set of devices, from the database of devices, for use in the electrical distribution apparatus.

In particular, the device selection module 104 is configured to select a set of devices that includes a set, or sub-set, of electrical devices for forming an electrical circuit, such as the electrical circuit shown in Figure 3, and an enclosure for mounting the electrical devices within a common housing.

For this purpose, the device selection module 104 is configured to select the set of devices using a device selection algorithm that includes a set of selection rules relating the one or more user inputs to respective device selections.

For example, for each combination of device attributes and/or facility attributes defined by the user inputs, the device selection algorithm may be configured to identify a corresponding set of devices from a preprogramed combination of device categories corresponding to said user inputs.

The selection rules that relate the user inputs, such as the facility attributes, and/or the apparatus attributes, to the respective device selections may be pre-programmed by the developer or manufacturer and stored as a set of computer readable instructions in the device selection module 104, for example.

In this manner, the selection rules may also be configured so as to comply with relevant standards and/or regulations for electrical distribution apparatuses in different applications. In other words, the device selection algorithm may use the facility attributes, defined by the user inputs, to select the set of devices based on selection rules that are compliant with one or more standards and/or regulations related to the indicated properties of the facility, particularly the electrical requirements of the building, for example.

The design generation module 106 is configured to receive the selected set of devices and to generate at least one of: a mounting arrangement for mounting the set of electrical devices within the selected enclosure; and/or a circuit layout for connecting the set of electrical devices into an electrical circuit within the enclosure.

The mounting arrangement defines a respective position for mounting each electrical device within the selected enclosure, arranging the set of electrical devices into functional groups on the various rails, or support structures, of the enclosure for efficient storage and electrical connection.

Accordingly, the generated mounting arrangement may be suitable for outputting to a manufacturing, and/or configuration system, for assembling the electrical distribution apparatus, substantially as shown in the example in Figure 4.

The circuit layout defines the upstream and downstream connections extending from each electrical device, thereby arranging the set of electrical devices into functional groups, and/or sub-circuits, that may be connected together to form an efficient circuit structure.

Accordingly, the generated circuit layout may be suitable for outputting to a manufacturing, and/or configuration system, for connecting the set of electrical devices together into an electrical circuit, substantially as shown in the example in Figure 3.

It shall be appreciated that the mounting arrangement and the circuit layout are not independent of one another since the electrical devices may be efficiently stored and connected together within the enclosure. Hence, in an example, the design generation module 106 may be configured to determine the mounting arrangement based, at least in part, on the circuit layout, and vice versa.

In this example, the design generation module 106 includes a mounting module 114 for determining the mounting arrangement and a circuitry module 116 for determining the circuit layout.

That is, in the described example the design generation module 106 includes the mounting module 114 and the circuitry module 116 as functional modules. Each of these modules may be provided by suitable software running on any suitable computing substrate using conventional or customer processors and memory. The modules may use a common computing substrate (for example, they may run on the same server). However, the described arrangement is not intended to limit the scope of the disclosure and, in other examples, the design generation module 106 may be configured to provide the functionality of the mounting module 114 and/or the circuitry module 116 without including such functional modules.

The mounting module 114 is configured to determine the mounting arrangement based on the technical data associated with each of the selected devices and the user inputs provided at the input module 102.

For this purpose, the mounting module 114 may be configured to determine the mounting arrangement using a mounting arrangement algorithm that may be stored as a series of computer readable instructions in the mounting module 114, for example.

When executed, the mounting arrangement algorithm may effectively provide a set of mounting rules, or series of processes, for identifying a respective position for mounting each of the electrical devices in the enclosure, as shall become clear.

The set of mounting rules may be pre-programmed by the developer or manufacturer. In this manner, the set of mounting rules may be based, at least in part, on one or more relevant standards and/or regulations related to the safety requirements of electrical distribution apparatuses. For example, the mounting arrangement algorithm may use the facility attributes (defined by the user inputs) to identify the respective positions of the electrical devices within the enclosure based on a set of mounting rules that are compliant with one or more standards and/or regulations related to the indicated properties of the facility, particularly the electrical requirements of the building, for example.

The optional circuitry module 116 may be configured to determine the circuit layout based on the technical data associated with each of the devices selected by the device selection module 104 and the user inputs provided at the input module 102.

For this purpose, the circuitry module 116 may be configured to determine the circuit layout using a layout algorithm that may be stored as a series of computer readable instructions in the mounting module 114, for example.

When executed, the layout algorithm may effectively provide a set of layout rules, or series of processes, for determining the relative upstream or downstream positioning of the set of electrical devices within the circuit layout and/or the connections between the electrical devices that produce the electrical circuit, as shall become clear.

The set of layout rules may be pre-programmed by the developer or manufacturer based, at least in part, on one or more relevant standards and/or regulations related to the safety requirements of electrical distribution apparatuses. For example, the layout algorithm may use the facility attributes (defined by the user inputs) to identify the respective upstream/downstream positions of the electrical devices within the circuit and to determine the electrical connections between the electrical devices based on layout rules that are compliant with one or more standards and/or regulations related to the indicated properties of the facility, particularly the electrical requirements of the building, for example.

The optional validation module 108 is configured to validate the mounting arrangement and/or the circuit layout to establish that the configuration of the set of electrical devices (when mounted in the enclosure) meets predetermined requirements for electrical distribution apparatuses.

For this purpose, the validation module 108 may be configured to estimate whether a heat dissipation capacity of the selected enclosure is greater than or equal to a total power loss of the set of electrical devices when the set of electrical devices are connected together in the manner described by the mounting arrangement and/or the circuit layout. In this manner, the validation module 108 may effectively review the validity, and/or safety, of the selected set of devices, as well as the generated circuit layout and/or the generated mounting arrangement.

The validation module 108 may be configured to estimate the total power loss and the heat dissipation capacity of the selected enclosure based on one or more of: the facility attributes, which describe the properties of the facility; the technical data associated with each of the selected devices; the circuit layout; and/or the mounting arrangement; for example.

For this purpose, the validation module 108 may use a validation algorithm to determine the estimates of the total power loss and/or the heat dissipation capacity. The validation algorithm may be stored as a series of computer readable instructions in the validation module 108, for example.

When executed, the validation algorithm may effectively provide a set of validation rules, or series of processes, for estimating the total power loss and/or the heat dissipation capacity of the enclosure. The validation rules may be pre-programmed by the developer or manufacturer based, at least in part, on one or more standards and/or regulations related to the safety requirements of the application of the electrical distribution apparatus.

If the total power loss of the electrical devices is less than the heat dissipation capacity of the enclosure, the validation module 108 may verify that the mounting arrangement and/or the circuit layout meet the predetermined requirements for the electrical distribution apparatus.

The validation module 108 may also do a plausibility check of the data related to the power management function, e.g. whether a given price limit is reasonable or unreasonable, a power supplier indicated in said data exists and so on.

Otherwise, the validation module 108 may require one or more further inputs, such as the selection of one or more further electrical devices, to increase the heat dissipation capacity of the enclosure and/or reduce the total power loss of the electrical devices or to enter useful data related to the power management function. Based on such further inputs, the validation module 108 can establish that the configuration meets the predetermined requirements for the electrical distribution apparatus.

The output module 112 is configured to output one or more outputs relating to the design and configuration of the electrical distribution apparatus. For example, the output module 112 may be configured to output one or more of: a datasheet, or bill of materials, describing the set of devices forming the electrical distribution apparatus; a circuit configuration based on the generated circuit layout; a mounting arrangement, or assembly, configuration for mounting the set of electrical devices to the enclosure based on the generated mounting arrangement, one or more heat calculations based on the operating temperature of the distribution board and/or a summary indicative of the power managing device and/or the data related to the power management function.

One or more of these outputs may be output to a manufacturing system for manufacturing the electrical distribution apparatus, or to a packaging system for packaging the set of devices together, for example.

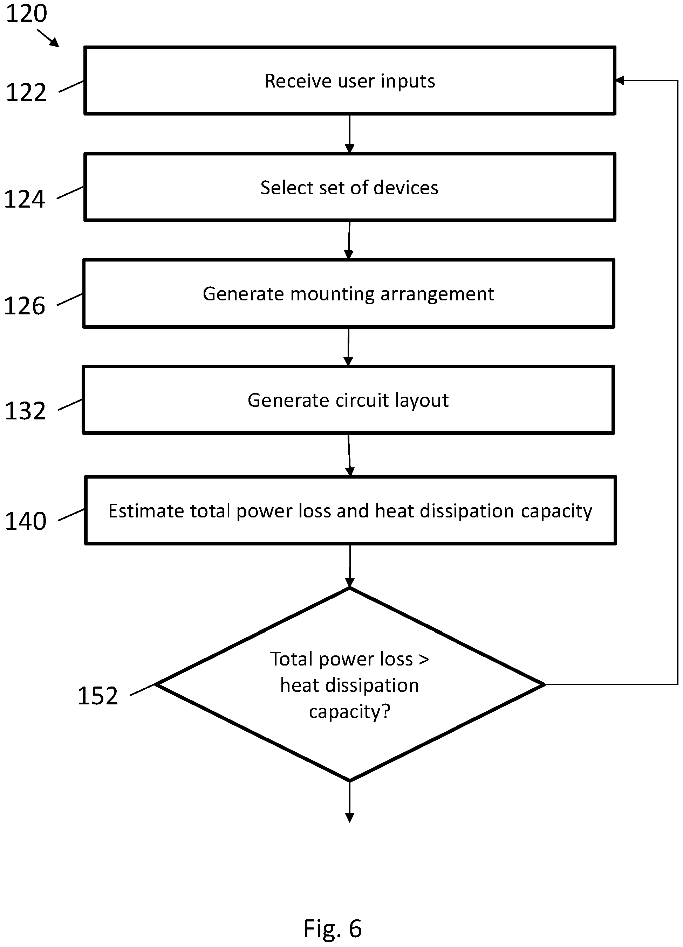

The operation of the relevance assessment system 100 shall now be described with additional reference to Figures 6 to 13.

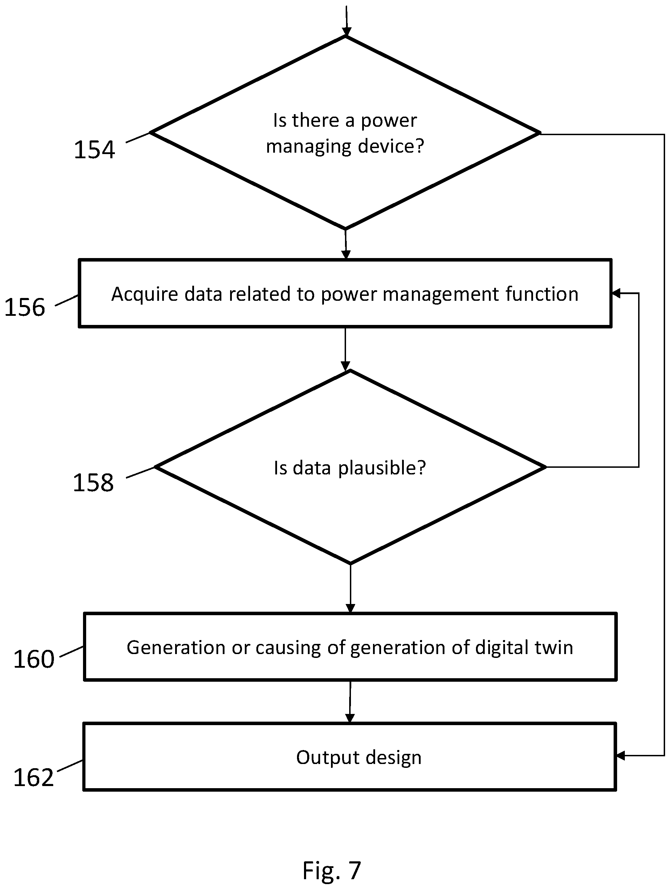

Figures 6 and 7 show an example method 120 of operating the system 100 to design and configure an electrical distribution apparatus for a building.

For the sake of simplicity, the method 120 is described with reference to the example electrical distribution apparatus 1 described above. However, it shall be appreciated that this description is provided by way of example only and is not intended to limit the scope of the disclosure.

In step 122, the system 100 is configured to receive the user inputs that define the apparatus attributes and facility attributes.

For example, the input module 102 may receive one or more user inputs from the human machine interface system. The one or more user inputs may define apparatus attributes and facility attributes for a prescribed set of apparatus parameters and facility parameters that describe the intended use of the electrical distribution apparatus and the properties of the building. In particular, the inputs may also refer to data related to the power management function.

The user inputs may be received in intervals, or stages, providing a sequence of user inputs that define successive apparatus parameters and/or facility parameters. For example, a first user input may define a facility attribute for the country of use, e.g. 'Germany'. A second user input may define a facility attribute relating to the type of building, e.g. 'an apartment', and a third user input may define an apparatus attribute for the type of electrical distribution apparatus, e.g. 'a consumer unit'. In this manner, a user may be effectively guided through a specification sequence, prompted to provide successive user inputs by the human machine interface system.

The user inputs may define the apparatus attributes and the facility attributes in the form of selections, values or data entries. For example, the user inputs may define selections from a plurality of apparatus attributes for one or more apparatus parameters and/or selections from a plurality of facility attributes for one or more facility parameters.

In an example, the plurality of apparatus attributes, and/or facility attributes, available for selection may depend on the preceding user inputs. For example, one or more apparatus attributes may be removed from the plurality of apparatus attributes that are available for selection for a respective apparatus parameter following an earlier user input that precluded such apparatus attributes.

To give an example, where the user selects a facility attribute describing the building as 'an apartment', the plurality of apparatus attributes relating to the type of electrical distribution apparatus may be limited to an energy metering board' or a consumer unit', with the option of an 'industrial consumer unit' having been removed due to the other user input.

Similarly, the set of apparatus parameters and/or facility parameters requiring user inputs may depend on the preceding user inputs. For example, if a first user input defined an apparatus attribute as a 'metering board', as opposed to a 'distribution board' or a 'consumer unit', then a subsequent user input may be needed to define an apparatus attribute for the desired rating of a meter panel for the electrical distribution apparatus.

The above can also refer to data related to the power management function. For example, entering a particular address where the electrical distribution apparatus 1 is planned to be located may cause the system 100 proposing particular power providers and/or power consumers acting in a micro grid, in which the electrical distribution apparatus 1 will be located.

A user input may also refer to whether a power managing function of a power managing device shall be activated or not, e.g. by ticking a respective check box.

The specification sequence may proceed in this manner until user inputs have been provided for each of the prescribed apparatus and facility parameters, or otherwise sufficient apparatus and/or facility attributes have been defined for the system 100 to identify a set of devices 2 for use in the electrical distribution apparatus 1.

Accordingly, in step 124, the system 100 is configured to select the set of devices 2 for use in the electrical distribution apparatus 1 based on the user inputs.

For example, the device selection module 104 may select the set of devices 2 from the database of devices stored in the memory storage module 110 using the device selection algorithm.

When executed, the device selection algorithm applies the set of selection rules to relate the facility attributes and/or apparatus attributes (defined by the user inputs) to respective device selections.

To give some examples, the device selection algorithm may include a selection rule relating a facility attribute defining the number of electrical sockets in the building, M, to a corresponding number of MCB devices, N. As a result, the set of devices may include an MCB device for each branch circuit that provides electrical power to a respective power socket of the building.

Another selection rule may determine a number and/or specification of devices from a surge protection device category based, at least in part, on whether a user input defined an apparatus attribute for overvoltage protection or not.

A further selection rule may determine a number and/or specification of devices from an RCD device category based, at least in part, on the number of MCBs selected and/or an apparatus attribute defining an earthing system for the electrical distribution apparatus.

Yet another selection rule may determine a size and/or type of enclosure based, at least in part, on the physical properties, such as the width, of the selected electrical devices. This relationship may also account for a suitable spacing between, or limit of, the electrical devices that can be mounted on respective rails of said enclosure in accordance with respective standards and/or guidelines applicable to the intended use of the electrical distribution apparatus.

In this manner, the device selection algorithm may provide a combination of rules, processes, or conditions, for identifying the set of devices 2, described in Figures 1 to 4.

In step 126, the system 100 determines the mounting arrangement for mounting the set of electrical devices 2 within the selected enclosure 5.

For example, the mounting module 114 may receive the set of devices 2, and associated technical data, and determine the mounting arrangement using the mounting arrangement algorithm.

When executed, the mounting arrangement algorithm applies the set of mounting rules to determine a respective position for each electrical device 3 on a rail 14a-d of the selected enclosure 5.

For example, the set of mounting rules may be configured to group the set of electrical devices into functional groups for mounting on respective rails of enclosure. Such functional groups are referred to as rail groups and the set of mounting rules may be further configured to determine a sub-arrangement of the electrical devices of each rail group on the respective rail.

Considered in more detail, the mounting rules may identify each rail group and determine the sub-arrangement of the electrical devices of each rail group based on one or more device attributes, such as the device category, associated with each device. In this manner, functionally related devices may be grouped together within a respective rail group and the devices in each rail group may ordered in a suitable manner for efficient electrical connection.

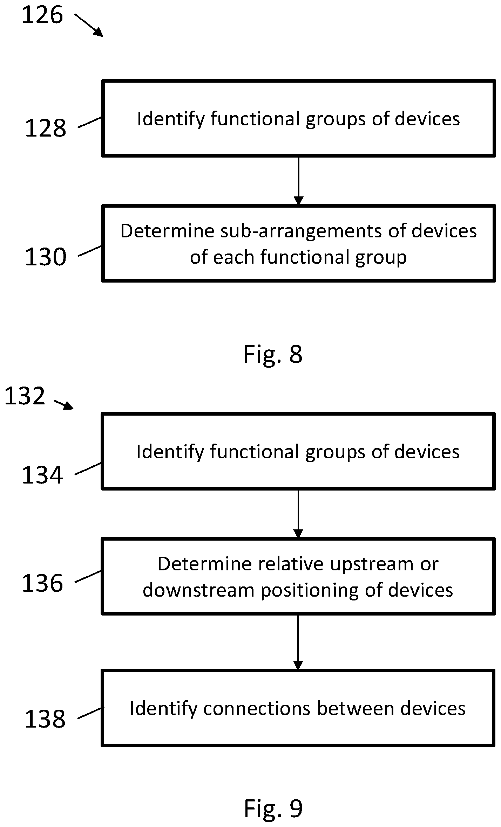

The functionality of the mounting module 114 and the mounting arrangement algorithm, in particular, may be illustrated more effectively with reference to sub-steps 128 to 130, as shown in Figure 8, which are described in more detail below.

Sub-steps 128 to 130 describe an example series of processes by which the mounting module 114 may determine the respective positions of each of the electrical devices 3 on the rails 14a-d of the selected enclosure 5.

In sub-step 128, the mounting module 114 may group the selected set of devices 2 into the functional rail groups.

For example, a first mounting rule may use device attributes describing the capacity of the selected enclosure to determine the number of rail groups and the capacity of each rail group. In particular, the number of rail groups may be determined based on the number of rails in the selected enclosure and the capacity of each rail group may be determined based on the width of each rail.

Accordingly, with respect to the selected enclosure 5, shown in Figure 4, the mounting module 114 may be configured to identify four rail groups, each having a respective capacity corresponding to the width of the first, second, third and fourth rails 14a-d respectively.

A second mounting rule may be configured to identify a first rail group for positioning on the first rail 14a of the enclosure 5. The second mounting rule may be configured such that the first rail group includes the electrical devices intended for use at an inlet end of the electrical circuit. Accordingly, the first rail group may include devices selected from a first combination of device categories that includes a main switch, an overvoltage protection device, a main RCD device, and/or an MCB for a Water heater, with a busbar system included for connecting the devices together.

Hence, in this example, the first rail group may include the main switch 24, the surge protection device 26 and the first busbar system 34a.

Another mounting rule may be configured to identify a second rail group for positioning on the second rail 14b of the enclosure 5. The mounting arrangement algorithm may be configured such that the second rail group includes electrical devices intended for downstream use in the electrical circuit.

Accordingly, the second rail group may include devices selected from a second combination of device categories that includes RCDs and MCBs, connected together by a respective busbar system.

In this case, the mounting rule may account for the physical limitations associated with mounting the devices of said rail group on the respective rail of the enclosure. Accordingly, the mounting rules may determine a second rail group that includes an RCD and as many MCBs that will fit on the second rail 14b of the enclosure 5 based on the width of the second rail 14b and combined widths of the selected RCD and MCB devices.

Hence, in this example, the second rail group may comprise the first RCD 28a and the first to eighth MCBs 30a-h, with the second busbar system 34b included to connect the devices together.

Further mounting rules, or processes, of the mounting arrangement algorithm may be configured to identify a third rail group for positioning on the third rail 14c of the enclosure 5 and a fourth rail group for positioning on the fourth rail 14d of the enclosure 5. Such mounting rules may be substantially as described for the second rail group.

Accordingly, the mounting module 114 may determine a third rail group comprising the second RCD 28b, the ninth to sixteenth MCBs 30i-p and the third busbar system 34c. The mounting module 114 may also determine a fourth rail group comprising the third RCD 28c, the seventeenth and eighteenth MCBs 30q-r and the fourth busbar system 34d.

In sub-step 130, the mounting module 114 may determine the sub-arrangements of the electrical devices of each rail group on the respective rail 14a-d.

The sub-arrangements may be identified based, at least in part, on one or more mounting rules that relate the electrical devices to respective positions on the rails 14a-d based on one or more device attributes, such as the device category, associated with each device.

For example, the mounting rules may determine the sub-arrangement of the electrical devices in each rail group based on a pre-programmed sequence of device categories configured to arrange the electrical devices for efficient electrical connection.

To give an example, the mounting arrangement algorithm may include mounting rules for a rail group that includes an RCD device, a plurality of MCB devices and a busbar system. Said mounting rules may be configured to position the RCD device at one end of the respective rail (in a suitable position for connection to adjacent rails by interconnecting conductors), and arrange the plurality of MCB devices in series adjacent to one another next to the RCD device. The mounting rules may also the position the busbar system in a suitable position for connecting the RCD devices and the plurality of MCB devices together.

According to such mounting rules, the mounting arrangement algorithm may relate each of the first, second and third RCDs 28a-c to corresponding positions at the first ends 15b-d of the respective rails 14b-d. The MCBs 30a-r of each rail group may be arranged in sequence, adjacent to the respective RCD 28a-c, extending towards the second ends 16b-d of the respective rail 14b-d. Each of the second, third and fourth busbar systems 34b-d may then be related to respective positions that extend from the first end 15b-d of the respective rail 14b-d towards the second end 16b-d of the respective rail 14b-d, connecting the MCBs 30a-r of each rail group and the respective RCD 28a-c together.

Similar mounting rules, adjusted for the devices of the first rail group, may be provided to relate: the main switch 24 to a position on the first rail 14a that is suitable for connection to the inlet terminal 31 of the electrical circuit 3; the surge protection device 26 to a position at the first end 15a of the first rail 14a for connection to the second rail 14b; and the first busbar system 34a to a position that extends between the main switch 24 and the surge protection device 26 to connect the devices together.

To complete the mounting arrangement, as shown in Figure 4, further mounting rules may relate the first, second and third interconnecting conductors 36a-c to respective positions that connect the devices together. For example, positions that extend between the first ends 15a-d of the first, second, third and fourth rails 14a-d and connect the surge protection device 26 and the first, second and third RCDs 28a-c together.

It shall be appreciated that this example is not intended to be limiting and the mounting arrangement algorithm may include similar rules, processes, or conditions for positioning a set of devices in another electrical distribution apparatus on the rails, or support structures, of the selected enclosure.

Returning to Figure 6, in step 132, the system 100 may determine the circuit layout for connecting the electrical devices 3 into the electrical circuit, shown in Figure 3, within the enclosure 5.

For example, the circuitry module 116 may receive the set of devices 2, and associated technical data, and determine the circuit layout using the layout algorithm.

When executed, the layout algorithm applies the set of layout rules to determine the relative upstream/downstream positioning of the electrical devices and the connections between the electrical devices 3 for forming the electrical circuit.

The set of layout rules may include rules for grouping the set of electrical devices into functional groups, such as the rail groups described previously, and determining the relative upstream/downstream positioning of the electrical devices within each functional group for controlling the downstream transfer of electrical power.

Accordingly, the set of layout rules may include rules for identifying the groups of functionally related devices, substantially as described in relation to the mounting arrangement algorithm, or for otherwise identifying those functional groups based on the mounting arrangement, for example.

The set of layout rules may also include respective rules for determining the relative upstream or downstream positioning of the electrical devices in each rail group. For example, the relative upstream or downstream positioning of the electrical devices in each rail group may depend on one or more device attributes associated with said devices, such as the rated current or the device category of each device.

To give an example, a layout rule may position an RCD device upstream of a plurality of MCB devices so that the RCD device is able to cut-off the delivery of electrical power to the MCB devices in dependence on detecting a leakage current. In this manner, higher ranking electrical devices, or electrical devices having a higher current rating, may be positioned upstream in the electrical circuit to control the delivery of electrical power to the lower ranking electrical devices, or the electrical devices having a lower current ranking.

The set of layout rules may also include one or more rules for connecting the electrical devices together and for connecting the electrical devices to the respective inlet and outlet terminals of the electrical circuit. Such rules may depend on one or more device attributes, such as the device category, associated with each device.

For example, the layout algorithm may include a layout rule for connecting an upstream device to a downstream device and another layout rule for connecting one or more adjacent devices (at the same level in the circuit structure) together. For example, adjacent devices that are either: i) within the same functional group; or ii) upstream devices of respective functional groups; may be connected together in parallel with one another.

Further layout rules may be configured to connect the upstream end of the circuit to the input terminal and the downstream ends of the circuit to respective outlet terminals.

The functionality of the circuitry module 116 and the layout algorithm, in particular, may be illustrated more effectively with reference to sub-steps 134 to 138, as shown in Figure 9, which are described in more detail below.

Sub-steps 134 to 138 describe an example series of processes by which the circuitry module 116 may determine the relative upstream or downstream positioning of the electrical devices 3 within the electrical circuit and the respective connections between the set of electrical devices 3.

In sub-step 134, the circuitry module 116 may identify the functional groups of electrical devices 3, such as the first, second, third, and fourth rail groups, substantially as described previously.

In sub-step 136, the circuitry module 116 may determine the relative upstream or downstream positioning of the electrical devices 3 based on one or more layout rules for the respective functional groups, as described above.

Accordingly, the layout rules may be configured to arrange the first rail group such that the main switch 24 is positioned at the inlet terminal 31 of the electrical circuit and the surge protection device 26 is positioned downstream of the main switch 24.

For the second rail group, the layout rules may position the first RCD 28a adjacent to, or downstream of, the surge protection device 26 and position the first to eighth MCBs 30ah adjacent to one another downstream of the first RCD 28a.

For the third rail group, the layout rules may position the second RCD 28b adjacent to the first RCD 28b. Whilst, the ninth to sixteenth MCBs 30i-p may be positioned downstream of the second RCD 28b, adjacent to one another.

For the fourth rail group, the layout rules may position the third RCD 28c adjacent to the first and second RCDs 28a, 28b, and position the seventeenth and eighteenth MCBs 28q-r positioned downstream of the third RCD 28c, adjacent to one another.

It shall be appreciated that the layout rules for the second, third and fourth rail groups may be identical and generalised for the relevant device categories, for example.

In sub-step 138, the circuitry module 116 may identify the connections between the electrical devices 3.

For example, the layout algorithm may connect adjacent devices in the circuit structure together in parallel so that: the first to eight MCBs 30a-h are connected together in parallel; the ninth to sixteenth MCBs 30i-p are connected together in parallel; the seventeenth and eighteenth MCBs 30q-r are connected together in parallel; and the first, second and third RCDs 28a-c are connected together in parallel.

The layout algorithm may connect each upstream device to one or more downstream devices in series. For example, the circuitry algorithm may connect the main switch 24 to the surge protection device 26 and connect the surge protection device 26 to the first, second and third RCDs 28a-c. The first RCD 28a may be connected to the first to eighth MCBs 30a-h. The second RCD 28b may be connected to the ninth to sixteenth MCBs 30i-p and the third RCD 28c may be connected to the seventeenth and eighteenth MCBs 30q-r.

As mentioned previously, further layout rules may connect the main switch 24 to the inlet terminal 31 of the electrical circuit, the surge protection device 26 to ground and each of the first to eighteenth MCBs 30a-r to a respective outlet terminal 32a-r.

At the end of step 132, the system 100 may generate a circuit layout substantially as described in Figure 3.

Returning to Figure 6, in step 140, the system 100 is configured to estimate the power loss of the electrical devices and the heat dissipation capacity of the selected enclosure in order to validate the mounting arrangement and/or the circuit layout.

For example, the validation module 108 may use the validation algorithm to estimate the total power loss of the set of electrical devices and to estimate the heat dissipation capacity of the selected enclosure.

When executed, the validation algorithm applies the set of validation rules to estimate the total power loss by: i) determining a group rated current for each of the electrical devices 3 based, at least in part, on the electrical connections extending from that device to one or more other electrical devices in the electrical circuit; and ii) estimating the power loss at each electrical device 3 based, at least in part, on the group rated current for that electrical device 3.

In particular, the validation algorithm may include one or more validation rules for identifying a plurality of sub-circuits within the electrical circuit based on the electrical connections between the devices in order to determine the group rated current of each device. Each sub-circuit may comprise an incoming, or upstream, electrical device connected to one or more outgoing, or downstream, electrical devices connected to one another in parallel. Accordingly, the validation algorithm may be configured to identify the plurality of sub-circuits based on the circuit layout and/or the mounting arrangement, for example.

The validation algorithm may also include validation rules for determining the group rated current of each electrical device based, at least in part, on the position of that electrical device within the structure of the respective sub-circuit and the technical data, or device attributes, associated with that device, such as the rated current and/or the number of poles of said device.

For example, the power loss algorithm may include a validation rule for determining the group rated current of each electrical device in each sub-circuit based, at least in part, on the number of outgoing, or downstream, electronic devices connected to that electrical device within that sub-circuit. In particular, the power loss algorithm may determine a rated diversity factor for each electrical device and the rated diversity factor of each electrical device may depend on the number of outgoing, or downstream, electronic devices connected thereto within that sub-circuit. In this manner, a first rated diversity factor may be determined for each electrical device that is not connected to any downstream electrical devices and a second rated diversity factor may be determined for each electrical device that is connected to eight downstream electrical device in a sub-circuit.

Another validation rule of the validation algorithm may limit the group rated currents of each of the one or more downstream devices in each sub-circuit so that a combined group rated current of the one or more downstream devices does not exceed the group rated current of the upstream device. The validation module 108 may ensure that such a validation rule is applied consistently for one or more overlapping sub-circuits. For example, where a downstream device of one sub-circuit is also an upstream device of another sub-circuit, the group rated current of that electrical device will be limited based on its downstream positioning in one of the sub-circuits.

A further validation rule of the validation algorithm may limit the group rated current of the upstream device of any sub-circuits that include a single downstream device connected in series to the upstream device. In particular, for such sub-circuits, the group rated current of the upstream device may not exceed the group rated current of the single downstream device.

The validation algorithm may be configured to determine the power loss for each electronic device based on the group rated current for that device using one or more known equations and/or algorithms, as shall be appreciated by the skilled person.

Notably, the power loss of each busbar system, and/or interconnecting conductor, may be determined based on the group rated current for the upstream device that said busbar system or interconnecting conductor connects to, for example.

The estimated power losses of the electrical devices may be summed together, or otherwise combined, to estimate the total power loss.

In this manner, the validation algorithm may provide a combination of rules, processes, or conditions, for estimating the total power loss of the set of electrical devices 2.

To estimate the heat dissipation capacity of the enclosure, the power loss algorithm may further include one or more validation rules, or equations, configured to estimate the heat dissipation capacity of the enclosure based on: the facility attributes, including the ambient temperature of the building; and the technical data associated with the selected enclosure, such as the dimensions of the enclosure and a rated operating temperature of the enclosure.

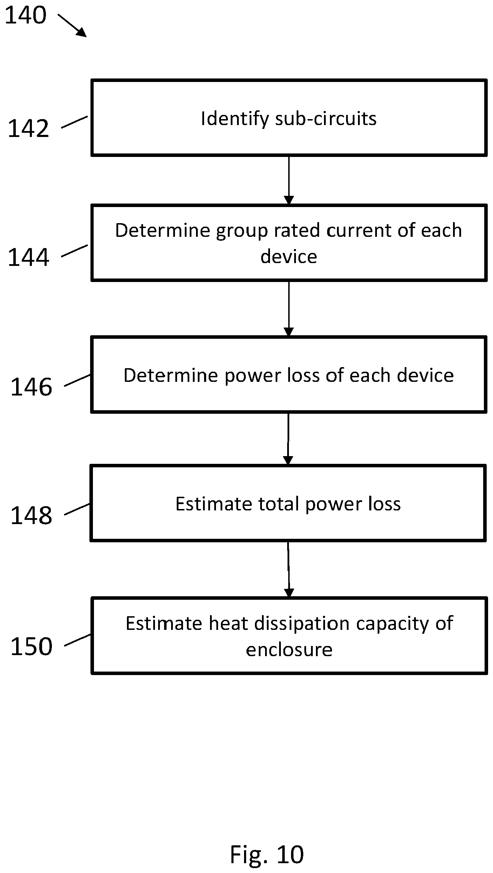

The functionality of the validation algorithm may be illustrated more effectively with reference to sub-steps 142 to 150, as shown in Figure 10, which are described in more detail below.

In sub-step 142, the validation module 108 may identify the plurality of sub-circuits within the electrical circuit. For example, identifying a respective sub-circuit for each incoming, or upstream, electrical device 3 that is connected to one or more outgoing, or downstream, electrical devices 3 connected in parallel to one another, as mentioned previously.

On this basis, the validation module 108 may identify a first sub-circuit formed by the main switch 24 as the upstream electrical device and the surge protection device 26 and the first, second and third RCDs 28a-c as downstream electrical devices.

The validation module 108 may also identify a second sub-circuit formed by the first RCD 28a as the upstream electrical device and the first to eighth MCBs 30a-h as downstream electrical devices. Similarly, the validation module 108 may identify a third sub-circuit formed by the second RCD 28b as the upstream electrical device and the ninth to sixteenth MCBs 30i-p as the downstream electrical devices. Additionally, the validation module 108 may identify a fourth sub-circuit formed by the third RCD 28c as the upstream electrical device and the seventeenth and eighteenth MCBs 30q-r as downstream devices.

In sub-step 144, the validation module 108 may determine the group rated current of each device 3 using the validation algorithm and the technical data associated with each device 3.

In particular, the validation module 108 may determine the group rated current of each electrical device 3 based on: a rated current attribute for each electrical device 3; a rated diversity factor for each electrical device 3, which may depend on the number of electrical devices 3 connected in parallel to said electrical device 3; a number of poles of said electrical device 3; and/or one or more validation rules of the validation algorithm.

It shall be appreciated that one or more methods for modifying the rated current of each device based on the respective rated diversity factor and the number of poles of said device. However, such methods are not described in detail here, as these will be familiar to the person skilled in the art.

The one or more validation rules of the validation algorithm may limit the group rated current of each of the one or more downstream devices in each sub-circuit so that the combined group rated currents of the first to eighth MCBs 30a-h in the first sub-circuit may not exceed the group rated current of the first RCD 28a. Similarly, the combined group rated currents of the surge protection device 26 and the first to third RCDs 28a-c may be limited so as not to exceed the group rated current of the main switch 24.

In sub-step 146, the validation module 108 may determine the power loss of each electrical device 3 based on the group rated current for said electrical device 3.

It shall be appreciated that one or more methods may be used for determining the power loss of each electrical device 3 based on the rated current for that electrical device 3. Nonetheless, it shall be appreciated that the power loss of each busbar system 34a-d, and/or each interconnecting conductor 36a-c, may be determined based on the group rated current of the upstream device that said busbar system 34a-d, and/or said interconnecting conductor 36a-c, connects to, for example.

In sub-step 148, the validation module 108 may estimate the total power loss by combing the power loss of each electrical device 3.

In sub-step 150, the validation module 108 may estimate the heat dissipation capacity of the enclosure 5 based on the facility attributes, including the ambient temperature of the building, as well as the dimensions of the enclosure 5 and a rated operating temperature of the enclosure 5.

It shall be appreciated that one or more methods for estimating the heat dissipation capacity of the enclosure 5 may be used. However, such methods are not described in detail here.

Returning to Figure 6, in step 152, the system 100 may compare the estimate of the total power loss to the estimated heat dissipation capacity of the enclosure 5. For example, the validation module 108 may compare the estimate of the total power loss to the estimated heat dissipation capacity of the enclosure 5.

If the estimate of the total power loss is greater than the estimated heat dissipation capacity of the enclosure 5, the system 100 may determine that the generated design of the electrical distribution apparatus 1 does not meet one or more safety requirements and the system 100 may require one or more further user inputs to modify the design.

For example, if the estimate of the total power loss is greater than the estimated heat dissipation capacity of the enclosure 5, the system 100 may effectively return to step 122 and prompt the user to provide one or more further user inputs. The further user inputs may cause the system 100 to re-determine, or modify, the set of devices 2, the circuit layout and/or the mounting arrangement, substantially as described above in steps 124 to 152.

If the estimate of the total power loss is less than or equal to the heat dissipation capacity of the enclosure 5, the design of the electrical distribution apparatus 1 may be validated as being compliant with the applicable regulations and/or standards and the system 100 may proceed to output one or more outputs relating to the design of the electrical distribution apparatus 1, in step 162.

For example, the output module 112 may be configured to output one or more of: a datasheet, or bill of materials, describing the set of devices 2 forming the electrical distribution apparatus 1; a circuit configuration based on the generated circuit layout; a mounting arrangement, or assembly, configuration for mounting the set of electrical devices 3 to the enclosure based on the generated mounting arrangement; and/or one or more heat calculations based on the operating temperature of the distribution board.

One or more of these outputs may be output to a manufacturing system for manufacturing the electrical distribution apparatus 1 or a packaging system for packaging the set of devices 2 together, for example.

Before proceeding to output one or more outputs relating to the design of the electrical distribution apparatus 1 in step 162, in this embodiment, after step 152, there is following step 154, in which the system 100 checks whether a power managing device is included in the electrical distribution apparatus 1. If there is no power managing device, the system 100 may immediately proceed to step 162.

If there is a power managing device included in the electrical distribution apparatus 1, data related to the power management function is acquired in step 156. However, step 156 may be skipped if said data has already been entered in step 122. Alternatively or in addition, data related to the power management function may be retrieved from the memory storage module 110.

In step 158, the system 100 checks if the data related to the power management function is plausible. For example, a check may be done whether a power consumer or power provider indicated in said data is available at the address of the electrical distribution apparatus 1. Further on, a check may be done if said data fits to the kind of the device downstream the electrical distribution apparatus 1. For example, it does not make much sense to offer power during night if the power management function is linked to a solar module unless there is a battery.

If said data is complete, a digital twin of the configuration of the electrical distribution apparatus 1 and/or the at least one power managing device is generated or caused to be generated in a power management platform on a computer server in a data network by the system 100 in step 160.

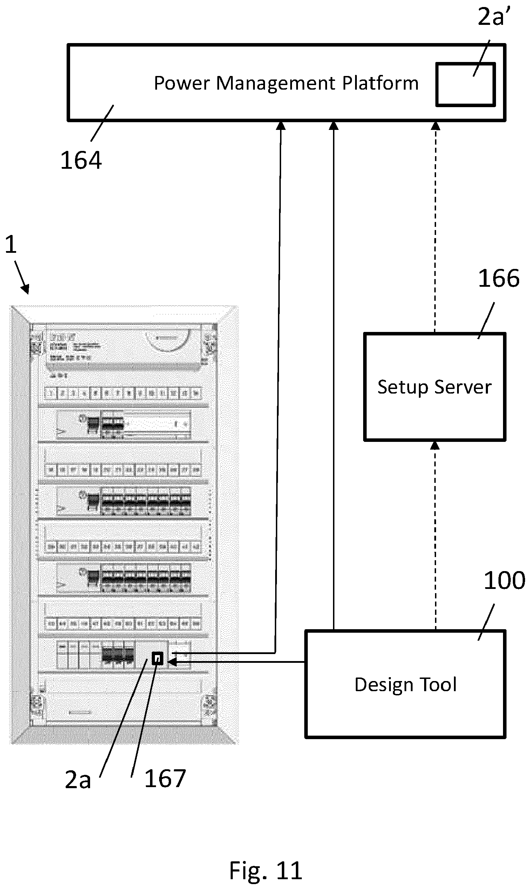

Step 160 and also the procedure taking place when the electrical distribution apparatus 1 is on site and the power managing device gets powered is disclosed by additional reference to Figure 11.

Figure 11 shows an electrical distribution apparatus 1 similar to that shown in Figure 1. The electrical distribution apparatus 1 comprises a set of devices 2 including a power managing device 2a, which is embodied as an loT-gateway controlling the behaviour of the electrical distribution apparatus 1 with regards power management. It may also control the behaviour of single electric circuits if it can communicate with switching devices 2 in the electrical distribution apparatus 1. It should also be noted that one or more of the switching devices (in particular MCBs) 2 may have such a power management capability, too. In such a case, a separate central electrical device 2a with a power management function may be omitted, and single circuits can be controlled with regards power management.

Figure 11 moreover shows a design tool or the system 100, by which the procedure according to Figures 6-10 is executed. It may be structured as outlined in Figure 5.

In addition, Figure 11 shows a power management platform 164 on a computer server in a data network and an optional setup server 166.

To enable the power management function, the power managing device 2a is registered on the power management platform 156. According to this embodiment of the disclosed method, this registering is caused during the design of the electrical distribution apparatus 1 so that once the power managing device 2a is powered and "alive", it is registered or recognized by the power management platform 156 and may operate as defined in the power management platform 156.

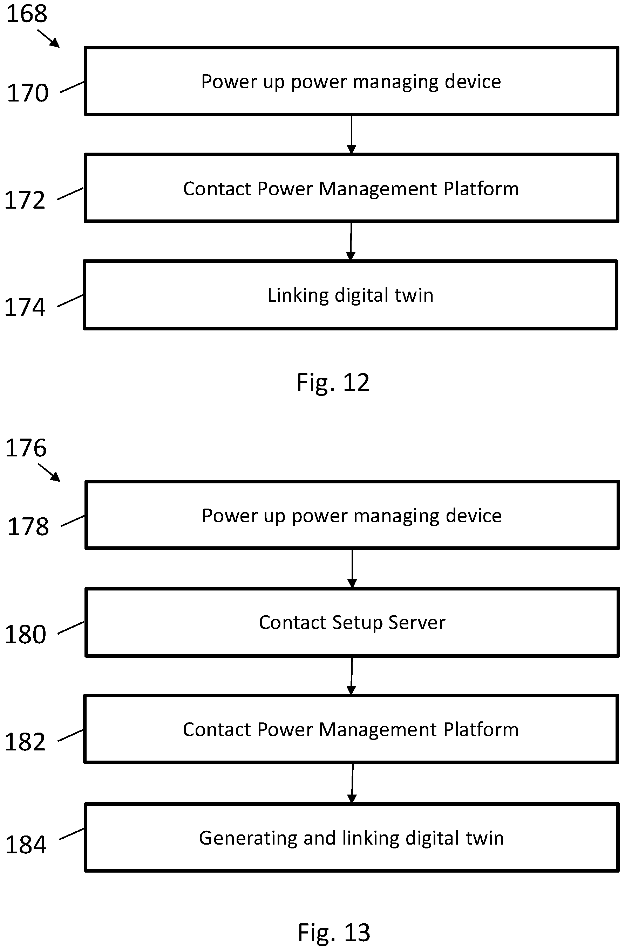

In a first embodiment A), which is indicated in Figure 11 by bold lines, the digital twin 2a' of the configuration of the electrical distribution apparatus 1 and/or the at least one power managing device 2a is generated directly in the power management platform 164 without the need of the setup server 166 in step 160. Once the power managing device 2a is powered, the digital twin 2a' gets "alive" which is explained in more detail by use of Figure 12. It is also possible that the digital twin 2a' is just caused to be generated in the power management platform 164 in step 160. In this case, data, which is necessary to generate the digital twin 2a' in the power management platform 164 is stored on the power management platform 164 in step 160 for later use. Once the power managing device 2a is powered, the digital twin 2a' is generated on the power management platform 164 and gets "alive", which is explained in more detail by use of Figure 12, too.

In a second embodiment B), which is indicated in Figure 11 by dashed lines, the digital twin 2a' of the configuration of the electrical distribution apparatus 1 and/or the at least one power managing device 2a is just caused to be generated in the power management platform 164 by preparing its generation on the setup server 166 in step 160. In detail, data, which is necessary to generate the digital twin 2a' in the power management platform 164 is stored on the setup server 166 in step 160 for later use. Once the power managing device 2a is powered, the digital twin 2a' is generated on the power management platform 164 and gets "alive", which is explained in more detail by use of Figure 13.

Mixed embodiments of variants A) and B) are possible as well. Here some data of the digital twin 2a' is stored in the power management platform 164 and some data of the digital twin 2a' is stored on the setup server 166 in step 160.

It shall be appreciated that the steps of the method 120 are merely provided as an example of the disclosure and that the steps may be altered, added and removed as will be appreciated by the person skilled in the art.

It shall also be noted, that steps, which are necessary to provide the digital twin 2a' including the power management function preferably are taken by the digital twin generation module 107 of Fig. 5.

Figure 12 now according to the first embodiment A) shows what happens when the power managing device 2a is powered after the electrical distribution apparatus 1 has been installed at the intended location by use of an exemplary method 168.

Generally, the power managing device 2a in a memory 167 has stored an address, which it contacts when it is powered. It may also comprise a space in memory 167 for an identification (e.g., a number or a name) of the power managing device 2a. This memory space can be empty when the power managing device 2a is delivered to the customer or may contain a unique identification, depending on how registration of the power managing device 2a in the power management platform 164 takes place.

In step 170 the power managing device 2a is powered. In step 172 the power managing device 2a contacts the server, whose address is stored in the memory 167 of the power managing device 2a.

In the first embodiment A), the address stored in the electrical device 2a is the address of the power management platform 166. Accordingly, the electrical device 2a contacts the power management platform 166 when it is powered. In step 174 the digital twin 2a' generated on the power management platform 164 in step 160 is linked to electrical distribution apparatus 1 and/or the power managing device 2a.

Linking the digital twin 2a' can be done by entering a predefined or arbitrary code on both the power managing device 2a and on the power management platform 164. In this case, the memory 167 for an identification can be empty when the power managing device 2a is delivered to the customer. In another example, the identification is already part of the digital twin 2a' when it is generated in step 160. So, no code is needed to be entered, because once the power managing device 2a contacts the power management platform 164 with its identification, the power management is immediately ready to operate. In this case, a unique identification is already stored in the power managing device 2a when it is delivered to the customer.

Figure 13 now according to the first embodiment B) shows what happens when the power managing device 2a is powered after the electrical distribution apparatus 1 has been installed at the intended location by use of an exemplary method 176.

In step 178 the power managing device 2a is powered. In step 180 the power managing device 2a contacts the server, whose address is stored in the memory 167 of the power managing device 2a. In the embodiment B), the address, which the power managing device 2a contacts on powering, leads to the setup server 166. Subsequently, data, which is necessary to generate the digital twin 2a' in the power management platform 164 and which has been stored on the setup server 166 in step 160 is retrieved. This data inter alia contains the address of the power management platform 164. In step 182 the power management platform 164 is contacted by the setup server 166 and said data for the digital twin 2a' is transferred to the power management platform 164. In step 184 this data is used to generate and link the digital twin 2a'.

Linking the digital twin 2a' can be done in a similar way as already disclosed for the embodiment A), e.g., by entering a predefined or arbitrary code on both the power managing device 2a and on the setup server 166 or by use of an identification stored both in the power managing device 2a and in the data for generating the digital twin 2a'.

As disclosed hereinbefore, some data of the digital twin 2a' is stored in the power management platform 164 and some data of the digital twin 2a' is stored on the setup server 166 in step 160 in mixed embodiments of variants A) and B). In this case, just the part stored on the setup server 166 is transferred to the power management platform 164 in step 182.

Generally, the setup server 166 and/or the power management platform 164 may provide the possibility to enter or alter data related to the generation of the digital twin 2a' including an identification of the power managing device 2a so that the generation of the digital twin 2a' may be influenced.

Once the power managing device 2a is powered and linked, it may operate as defined in the power management platform 166. The power management function of the power managing device 2a may control from where power is drawn, from which kind of power source power is drawn, at which price power is drawn, at which time power may be drawn and so on. In this way, a user of the electrical distribution apparatus 1 can define how devices downstream of the electrical distribution apparatus 1 are operated. In the same way, the power management function can also control under which conditions power generated upstream of the electrical distribution apparatus 1 may fed power into the grid. For example, the power managing device 2a may control where to power is delivered, at which price power is delivered, at which time power may be delivered and so on. In particular, the power managing device 2a can act in a power trading network via the power management platform 164 so as to request or offer power as defined by the user. More particularly, trading and contracting can be based on the blockchain technology and allow peer-to-peer contracts without the need of traditional power suppliers.

Generally, the power management platform 164 may provide the possibility to enter or alter control data in the digital twin 2a' to influence the way of working of the power management function of the power managing device 2a. An example for such control data can be a preferred power source or a price limit. A preferred power source can be a standard energy source, a renewable power source, a photovoltaic power source, a power source based on a fuel cell, etc. A price limit can be set as an amount of money related to an amount of energy (e.g., 5 ct/kWh) or an open limit. This control data is synchronized with or mirrored in the power managing device 2a. In this way, the power managing device 2a can fulfil its power management function according to the control data entered or altered in the digital twin 2a'.

Of course, said control data may also be entered during design of the electrical distribution apparatus 1 in step 122 and/or step 156. In this way, the power managing device 2a can fulfil its power management function according to said control data once the digital twin 2a' is linked and control data is synchronized.

Generally, the (physical) power managing device 2a can be linked to the digital twin 2a' of the electrical distribution apparatus 1 or the digital twin 2a' of the power managing device 2a if there is just a single power managing device 2a within the electrical distribution apparatus, which manages the total flow of electrical energy via the electrical distribution apparatus 1. In this case, the digital twin 2a' of the electrical distribution apparatus 1 or the digital twin 2a' of the power managing device 2a may be used to manage the total flow of electrical energy via the electrical distribution apparatus 1. If the power managing device(s) 2a control flow of electrical energy into or from distinct electric circuits downstream of the electrical distribution apparatus 1, a digital twin 2a' of the power managing device or separate digital twins 2a' of the power managing devices 2a may advantageously be used. It should be noted in this context, that managing several electric circuits may also be done through a single power managing device 2a which controls a number of switching devices. In this case, there may be a single digital twin 2a' containing control data of these switching devices, or there may also be separate digital twins 2a' for each switching device. Anyway, the logical structure of the digital twin(s) 2a' shall be designed in a way that makes clear to a user of the electrical distribution apparatus 1 which device he is actually accessing.

For the sake of completeness, it should be noted that methods 168 and 176 do not necessarily take place in the disclosed way if the designer of the electrical distribution apparatus 1 indicated that a power managing function of a power managing device 2a shall not be activated, e.g. by ticking a respective check box in the method 120. In this case, a digital twin 2a' can be generated and linked as disclosed hereinbefore without switching on the power managing function, or a digital twin 2a' is not generated or linked at all. In the first case, the power managing function can be switched on in the digital twin 2a' later on. In the second case, the digital twin 2a' has to be generated and/or linked before.

It shall be appreciated that the steps of the methods 168 and 176 are merely provided as an example of the disclosure and that the steps may be altered, added and removed as will be appreciated by the person skilled in the art.

In summary, a method of configuring an electrical distribution apparatus 1 for installation in a facility is proposed. The method comprises the steps of
- determining a set of electrical devices 3 for inclusion in the electrical distribution apparatus 1 and an enclosure 5 for mounting the set of electrical devices 3 by the design and configuration system or tool 100 ("system 100" for short), wherein at least one of the electrical devices 3 is a power managing device 2a, which has a power management function, according to which a flow of electrical energy via the electrical distribution apparatus 1 is controlled, and which has a memory 167 for storing control data for controlling the power management function, and
- generating a mounting arrangement for mounting the set of electrical devices 3 within the enclosure 5 by the design and configuration system 100. In addition,
- a digital twin 2a'of the configuration of the electrical distribution apparatus 1 and/or the at least one power managing device 2a is generated or caused to be generated in a power management platform 164 on a computer server in a data network by the design and configuration system 100,
- wherein the digital twin 2a' includes a graphical representation of the electrical distribution apparatus 1 and/or the at least one power managing device 2a and data related to the power management function of the at least one power managing device 2a including said control data for controlling the power management function and
- wherein the digital twin 2a' allows managing the power management function including generation and/or altering said data related to the power management function and including synchronization of said control data between the memory 167 of the at least one power managing device 2a and the digital twin 2a' by the power management platform 164.

The electrical distribution apparatus 1 can comprise
a) a single power managing device 2a, wherein a digital twin 2a' of the configuration of the electrical distribution apparatus 1 including a graphical representation of the same and data related to the power management function of the at least one power managing device 2a is generated in the power management platform 164, which digital twin 2a'of the configuration of the electrical distribution apparatus 1 allows managing the power management function or
b) a single power managing device 2a, wherein a digital twin 2a' of the configuration of the electrical distribution apparatus 1 including a graphical representation of the same and a digital twin 2a' of the power managing device 2a including a graphical representation of the same and data related to the power management function of the at least one power managing device 2a is generated in the power management platform 164, which digital twin 2a' of the power managing device 2a allows managing the power management function or
c) a plurality of power managing devices 2a, wherein a digital twin 2a' of the configuration of the electrical distribution apparatus 1 includes a graphical representation of the same and digital twins 2a' of the power managing devices 2a, each including a graphical representation of the same and data related to the power management function of the respective power managing device 2a is generated in the power management platform 164, which digital twins 2a' of the power managing devices 2a allow managing the power management function or
d) a plurality of power managing devices 2a, and a digital twin 2a' of the configuration of the electrical distribution apparatus 1 including a graphical representation of the same and data related to the power management functions of the plurality of power managing devices 2a is generated in the power management platform 164, which digital twin 2a' of the electrical distribution apparatus 1 allows managing the power management functions.

The at least one power managing device 2a can have a memory 167 with an address of the power management platform 164 stored therein, which address it contacts when it is powered, whereupon linking the digital twin 2a' to the at least one power managing device 2a is initiated in the power management platform 164.

Alternatively, the at least one power managing device 2a can have a memory 167 with an address of the setup server 166 stored therein, which address it contacts when it is powered. In this case, the setup server 166 has stored an address of the power management platform 164, which it contacts when it is contacted by the at least one power managing device 2a, whereupon linking the digital twin 2a' to the at least one power managing device 2a is initiated in the power management platform 164. In this case, data for generating the digital twin 2a' can be stored on the setup server 166 by the design and configuration system 100, wherein said data is sent to the power management platform 164 when the setup server 166 is contacted by the power managing device 2a upon being powered, whereupon the digital twin 2a' is generated based on that data on the power management platform 164.

The at least one power managing device 2a can have stored an identification in a memory 167, which it submits when it is powered, whereupon the digital twin 2a' is linked to the at least one power managing device 2a based on said identification.

Alternatively, a code can entered in both the at least one power managing device 2a and the digital twin 2a', whereupon said digital twin 2a' is linked to the at least one power managing device 2a' by the power management platform 164.

It may also be provided that an identification entered in the digital twin is synchronized with the at least one power managing device 2a and stored in a memory 167 there.

In a further embodiment, an identification stored in the at least one power managing device 2a', which is intended to be built into the electrical distribution apparatus 1, is acquired by the design and configuration system 100 and also stored in the digital twin 2a' or also stored in data for generating the digital twin 2a' before the at least one power managing device 2a is built into the electrical distribution apparatus 1. Accordingly, the identification may be stored during configuration/design of the electrical distribution apparatus 1, before the power managing device 2a is delivered to the customer, etc.

Alternatively, an identification of the at least one power managing device 2a can be acquired from a user during configuration of the electrical distribution apparatus 1 and stored in the at least one power managing device 2a, which is intended to be built into the electrical distribution apparatus 1, and also stored in the digital twin 2a' or also stored in data for generating the digital twin 2a' before the at least one power managing device 2a' is built into the electrical distribution apparatus 1. Accordingly, again the identification may be stored during configuration/design of the electrical distribution apparatus 1, before the power managing device 2a is delivered to the customer, etc.

Particularly, generating the mounting arrangement by the design and configuration system 100 can include considering mounting rules, according to which generating a mounting arrangement for mounting the set of electrical devices 3 within the enclosure 5 is generated. Additionally, a circuit layout for providing electrical connections to the set of electrical devices 3 according to a set of layout rules can be generated by the design and configuration system 100. Moreover, the mounting arrangement and/or the circuit layout can be validated by the design and configuration system 100 in view of whether the configuration of the set of electrical devices 3 meets predetermined requirements for the electrical distribution apparatus 1 when mounted in the enclosure 5.

So, in a nutshell, a digital twin 2a' of the configuration of the electrical distribution apparatus 1 and/or the at least one power managing device 2a can be generated or caused to be generated during the design process of the electrical distribution apparatus 1 and can be stored in relevant locations by the design and configuration system 100. In this way, setup of a power management function within an electrical distribution apparatus 1 is substantially eased and for example can be done by the electrician designing the electrical distribution apparatus 1 during the design process.

Many modifications may be made to the above-described examples without departing from the scope of the appended claims.

## Claims

1. A method of designing and configuring an electrical distribution apparatus (1) for installation in a facility, the method comprising:
- determining a set of electrical devices (3) for inclusion in the electrical distribution apparatus (1) and an enclosure (5) for mounting the set of electrical devices (3) by a design and configuration system (100), wherein at least one of the electrical devices (2) is a power managing device (2a), which has a power management function, according to which a flow of electrical energy via the electrical distribution apparatus (1) is controlled, and which has a memory (167) for storing control data for controlling the power management function, and
- generating a mounting arrangement for mounting the set of electrical devices (3) within the enclosure (5) by the design and configuration system (100),
**characterized in that**
- a digital twin (2a') of the configuration of the electrical distribution apparatus (1) and/or the at least one power managing device (2a) is generated or caused to be generated in a power management platform (164) on a computer server in a data network by the design and configuration system (100),
- wherein the digital twin (2a') includes a graphical representation of the electrical distribution apparatus (1) and/or the at least one power managing device (2a) and data related to the power management function of the at least one power managing device (2a) including said control data for controlling the power management function and
- wherein the digital twin (2a') allows managing the power management function including generation and/or altering said data related to the power management function and including synchronization of said control data between the memory (167) of the at least one power managing device (2a) and the digital twin (2a') by the power management platform (164).

2. Method as claimed in claim 1, **characterized in that**
a) the electrical distribution apparatus (1) comprises a single power managing device (2a), and a digital twin (2a') of the configuration of the electrical distribution apparatus (1) including a graphical representation of the same and data related to the power management function of the at least one power managing device (2a) is generated in the power management platform (164), which digital twin (2a') of the configuration of the electrical distribution apparatus (1) allows managing the power management function or
b) the electrical distribution apparatus (1) comprises a single power managing device (2a), and a digital twin (2a') of the configuration of the electrical distribution apparatus (1) including a graphical representation of the same and a digital twin (2a') of the power managing device (2a) including a graphical representation of the same and data related to the power management function of the at least one power managing device (2a) is generated in the power management platform (164), which digital twin (2a') of the power managing device (2a) allows managing the power management function or
c) the electrical distribution apparatus (1) comprises a plurality of power managing devices (2a), and a digital twin (2a') of the configuration of the electrical distribution apparatus (1) including a graphical representation of the same and digital twins (2a') of the power managing devices (2a), each including a graphical representation of the same and data related to the power management function of the respective power managing device (2a) is generated in the power management platform (164), which digital twins (2a') of the power managing devices (2a) allow managing the power management function or
d) the electrical distribution apparatus (1) comprises a plurality of power managing devices (2a), and a digital twin (2a') of the configuration of the electrical distribution apparatus (1) including a graphical representation of the same and data related to the power management functions of the plurality of power managing devices (2') is generated in the power management platform (164), which digital twin (2a') of the electrical distribution apparatus (1) allows managing the power management functions.

3. Method as claimed in claim 1 or 2, **characterized in that**
i) the at least one power managing device (2a) has stored an address of the power management platform (164), which it contacts when it is powered, whereupon linking the digital twin (2a') to the at least one power managing device (2a) is initiated or
ii) the at least one power managing device (2a) has stored an address of a setup server (166), which it contacts when it is powered, and the setup server (166) has stored an address of the power management platform (164), which it contacts when it is contacted by the at least one power managing device (2a), whereupon linking the digital twin (2a') to the at least one power managing device (2a) is initiated.

4. Method as claimed in claim 3, **characterized in that** in case ii) data for generating the digital twin (2a') is stored on the setup server (166) by the design and configuration system (100), and said data is sent to the power management platform (164) when the setup server (166) is contacted by the power managing device (2a) upon being powered, whereupon the digital twin (2a') is generated based on that data on the power management platform (164).

5. Method as claimed in any one of claims 1 to 4, **characterized in that** the at least one power managing device (2a) has stored an identification, which it submits when it is powered, and the digital twin (2a') is linked to the at least one power managing device (2a) based on said identification.

6. Method as claimed in any one of claims 1 to 4, **characterized in that** a code is entered in both the at least one power managing device (2a) and the digital twin (2a'), whereupon said digital twin (2a') is linked to the at least one power managing device (2a).

7. Method as claimed in any one of claims 1 to 6, **characterized in that** an identification entered in the digital twin (2a') is synchronized with the at least one power managing device (2a) and stored in a memory (167) there.

8. Method as claimed in any one of claims 1 to 7, **characterized in that**
- an identification stored in the at least one power managing device (2a), which is intended to be built into the electrical distribution apparatus (1), is acquired by the design and configuration system (100) and also stored in the digital twin (2a') or also stored in data for generating the digital twin (2a') before the at least one power managing device (2a) is built into the electrical distribution apparatus (1) or
- an identification of the at least one power managing device (2a) is acquired from a user during configuration of the electrical distribution apparatus (1) and stored in the at least one power managing device (2a), which is intended to be built into the electrical distribution apparatus (1), and also stored in the digital twin (2a') or also stored in data for generating the digital twin (2a') before the at least one power managing device (2a) is built into the electrical distribution apparatus (1)

9. Method as claimed in any one of claims 1 to 8, **characterized in that** an information is acquired during configuration of the electrical distribution apparatus (1) by the design and configuration system (100) whether managing the power management function shall be enabled in the digital twin (2a') or not.

10. Method as claimed in any one of claims 1 to 9, **characterized in that**
- generating the mounting arrangement by the design and configuration system (100) including consideration of mounting rules, according to which a mounting arrangement for mounting the set of electrical devices (3) within the enclosure (5) is generated
generating a circuit layout for providing electrical connections to the set of electrical devices (3) according to a set of layout rules by the design and configuration system (100) and
validating the mounting arrangement and/or the circuit layout by the design and configuration system (100) in view of whether the configuration of the set of electrical devices (3) meets predetermined requirements for the electrical distribution apparatus (1) when mounted in the enclosure (5).

11. Design and configuration system (100) for designing and configuring an electrical distribution apparatus (1) for installation in a facility, which is embodied to
- determine a set of electrical devices (3) for inclusion in the electrical distribution apparatus (1) and an enclosure (5) for mounting the set of electrical devices (3), wherein at least one of the electrical devices (2) is a power managing device (2a), which has a power management function, according to which a flow of electrical energy via the electrical distribution apparatus (1) is controlled, and which has a memory (167) for storing control data for controlling the power management function, and
- generate a mounting arrangement for mounting the set of electrical devices (3) within the enclosure (5),
**characterized in that**
- a digital twin (2a') of the configuration of the electrical distribution apparatus (1) and/or the at least one power managing device (2a) is generated or caused to be generated in a power management platform (164) on a computer server in a data network by the design and configuration system (100),
- wherein the digital twin (2a') includes a graphical representation of the electrical distribution apparatus (1) and/or the at least one power managing device (2a) and data related to the power management function of the at least one power managing device (2a) including said control data for controlling the power management function and
- wherein the digital twin (2a') allows managing the power management function including generation and/or altering said data related to the power management function and including synchronization of said control data between the memory (167) of the at least one power managing device (2a) and the digital twin (2a') by the power management platform (164).

12. Power management platform (164) on a computer server in a data network, **characterized in that**
- the power management platform (164) is designed to receive data related to a digital twin (2a') of a configuration of an electrical distribution apparatus (1) and/or at least one power managing device (2a) and to store the digital twin (2a') in a memory of the computer server,
- wherein the electrical distribution apparatus (1) includes a set of electrical devices (3) and an enclosure (5) for mounting the set of electrical devices (3), wherein at least one of the electrical devices (2) is a power managing device (2a), which has a power management function, according to which a flow of electrical energy via the electrical distribution apparatus (1) is controlled, and which has a memory (167) for storing control data for controlling the power management function,
- wherein the digital twin (2a') includes a graphical representation of the electrical distribution apparatus (1) and/or the at least one power managing device (2a) and data related to the power management function of the at least one power managing device (2a) including said control data for controlling the power management function,
- wherein the digital twin (2a') allows managing the power management function including generation and/or altering said data related to the power management function and including synchronization of said control data between the memory (167) of the at least one power managing device (2a) and the digital twin (2a') by the power management platform (164).

13. Arrangement, comprising a data network with one or more computers and/or computer servers, which is/are designed to execute a design and configuration system (100) according to claim 11 and to run a power management platform (164) according to claim 12,
**characterized in**
- an electrical distribution apparatus (1) installed in a facility, comprising a set of electrical devices (3) and an enclosure (5) for mounting the set of electrical devices (3), wherein at least one of the electrical devices (2) is a power managing device (2a), which has a power management function, according to which a flow of electrical energy via the electrical distribution apparatus (1) is controlled, and which has a memory (167) for storing control data for controlling the power management function, and
- a data link between the design and configuration system (100) and the power management platform (164) and between the power management platform (164) and the power managing device (2a) in the electrical distribution apparatus (1).

14. A non-transitory, computer-readable storage medium having instructions stored thereon that, when executed by a computer and/or a computer server, cause the computer and/or computer server to carry out the method of any of the claims 1 to 9.
